# EUROPÄISCHE PATENTSCHRIFT

(11) **EP 3 956 071 B1**
(45) Veröffentlichungstag und Bekanntmachung des Hinweises auf die Patenterteilung: **14.02.2024**
(21) Anmeldenummer: 20710914.1
(22) Anmeldetag: 11.03.2020
(51) Int. Cl.: B05B 1/00, B05B 3/00, B05B 7/00, B05B 12/00, B05B 15/00

(54) **VERFAHREN ZUR ÜBERWACHUNG AUF ABLAGERUNGEN AN EINER DÜSENSPITZE**
METHOD FOR MONITORING DEPOSITS ON A NOZZLE TIP
PROCÉDÉ DE SURVEILLANCE DE DÉPÔTS SUR UN EMBOUT DE BUSE

(30) Priorität: 18.04.2019 DE 102019205737
(43) Veröffentlichungstag der Anmeldung: 23.02.2022
(73) Patentinhaber: Glatt Gesellschaft mit beschränkter Haftung, 79589 Binzen (DE)
(72) Erfinder: NOWAK, Reinhard, 79540 Lörrach (DE); STEINKE, Lars, 79541 Lörrach (DE)
(74) Vertreter: Patentanwälte Magenbauer & Kollegen Partnerschaft mbB
(86) Internationale Anmeldenummer: PCT/EP2020/056547
(87) Internationale Veröffentlichungsnummer: WO 2020/212027

(56) Entgegenhaltungen:
- EP-B1- 1 497 034
- DE-A1- 2 419 148
- DE-B4- 10 116 051

## Beschreibung

Die Erfindung betrifft ein Verfahren zur Überwachung eines Düsenmundstücks auf Ablagerungen an einer Düse zum Versprühen von Stoffen, insbesondere Dispersionen, Emulsionen oder Suspensionen, umfassend einen das Düsenmundstück aufweisenden Düsenkörper, wobei der Düsenkörper ein mit einer Zuführung für den zu versprühenden Stoff verbundenes eine Innenwandung und eine Austrittsöffnung aufweisendes Innenrohr und ein zum Innenrohr beabstandetes und mit einer Zuführung für ein Gas verbundenes eine Austrittsöffnung aufweisendes Außenrohr aufweist, und die Austrittsöffnung des Innenrohrs und die Austrittsöffnung des Außenrohrs im Bereich des Düsenmundstückes angeordnet sind.

In industriellen Prozessen, wie beispielsweise der Granulation, dem Coating von Tabletten und Pellets sowie der direkten Herstellung von Pellets, kommen sehr häufig Düsen bzw. Sprühdüsen zum Einsatz. Hierbei werden die Partikel mit einer Schicht und/oder einem Film überzogen. In der Regel werden Flüssigkeiten, in denen Feststoffe gelöst oder suspendiert sind, versprüht. Diese Sprühprozesse können mehrere Stunden dauern. Durch die Zerstäubung wird der Flüssigkeitsstrahl in kleine Tröpfchen zerstäubt. Die hierbei entstehende Tröpfchengröße ist von essentieller Bedeutung für den Herstellungs- und/oder Sprühprozess. Sind die Tröpfchen zu klein, besteht die Gefahr, dass sie trocknen bevor sie ihr Ziel erreichen, sind die Tröpfchen zu groß, besteht die Gefahr, dass unerwünschte Agglomerate entstehen. Durch die prozessbedingten Wirbel vor der Düse kann es - insbesondere bei langanhaltenden Sprühprozessen - zu Ablagerungen an der Düsenöffnung, also einer Bartbildung, kommen. Diese Ablagerungen beeinflussen die Symmetrie und die Tröpfchengröße des Sprays, sodass es zu nicht erwünschten Prozessauswirkungen wie beispielsweise der Sprühtrocknung und/oder lokalen Überfeuchtung und Agglomeration, kommt. Die Tröpfchengröße kann zudem dadurch beeinflusst werden, dass sich in der Zuführung für den zu versprühenden Stoff oder der Zuführung für das Gas, insbesondere das Zerstäubergas, zu beschichtende bzw. zu behandelnde Partikel ab- oder festsetzen. Ein solches Ab- oder Festsetzen kann insbesondere in den Zeitabschnitten erfolgen, in denen nicht gesprüht wird, bspw. beim Befüllen der Vorrichtung, insbesondere des Fluidisierungsapparates oder des Trommelcoaters, indem die Partikel in die Austrittsöffnungen der Düse gelangen und diese dadurch verstopfen.

Der nachstehende Stand der Technik stellt technische Lösungen dar, die unerwünschten Ablagerungen an der Düse, insbesondere am Düsenmundstück, verhindern oder zumindest minimieren.

Die europäische Patentschrift EP 1 497 034 B1 zeigt eine selbstreinigende Sprühdüse und insbesondere eine selbstreinigende Düse zur Verwendung in einer Vorrichtung für die Zubereitung eines Partikelmaterials durch ein kontrolliertes Agglomerationsverfahren. Die selbstreinigende Sprühdüse weist ein mittleres Rohr, das einen mittigen Durchlass zum Zuführen einer Flüssigkeit aufweist, wobei der Durchlass in einer Öffnung zum Ausgeben der Flüssigkeit mündet, ein das mittlere Rohr umgebendes zweites Rohr, wodurch ein erster Durchlass zwischen dem mittleren Rohr und dem zweiten Rohr zum Zuführen von primär Luft gebildet ist, einen Düsenkegel, der am Ende des zweiten Rohres angeordnet ist und den Außenumfang eines ersten Auslassspalts des ersten Durchlasses bildet, wodurch durch dem ersten Durchlass zugeführte Luft mit der Flüssigkeit vermischt wird, um einen Flüssigkeit/Luft-Sprühnebel zu bilden, ein das zweite Rohr umgebendes drittes Rohr, wodurch ein zweiter Durchlass zwischen dem zweiten und dem dritten Rohr zum Zuführen von Sekundärluft gebildet ist, eine am Ende des dritten Rohres angeordnete Hülse, welche den Außenumfang eines zweiten Auslassspalts des zweiten Durchlasses bildet, aufweist, wobei der Düsenkegel zum Einstellen der Größe des ersten Auslassspalts verstellbar am Ende des zweiten Rohres angeordnet ist.

In der internationalen Patentanmeldung WO 2013/010930 A1 wird eine Selbstreinigungsdüse zum Versprühen eines Fluids mit einem Düsengehäuse und einem darin angeordneten, mehrteilig ausgebildeten Düsenkopf beschrieben, welcher einen Strömungskanal mit einer Austrittsöffnung für das Fluid einschließt, wobei der Düsenkopf zumindest ein feststehendes und wenigstens ein verschiebbar gelagertes Kopfelement besitzt, welche jeweils einen Abschnitt der Austrittsöffnung bilden, wobei das verschiebbare Kopfelement während des Normalbetriebs vom Fluiddruck gegen einen in Strömungsrichtung des Fluids liegenden Anschlag und während der Selbstreinigung bei vermindertem Fluiddruck von einer Feder entgegen der Strömungsrichtung gedrückt wird.

Die Offenlegungsschrift DE 43 24 731 A1 zeigt eine selbstreinigende Sprühdüse zum Versprühen eines Fluids aus einer Druckmittelquelle, wobei ein rohrförmiges Fitting vorgesehen ist, welches einen in seiner Längsrichtung verlaufenden inneren Fluidkanal aufweist, welches mit einem Einlass und mit einem Auslass versehen ist und welches mit Verbindungseinrichtungen zum Herstellen einer Verbindung mit der Druckmittelquelle versehen ist; ein rohrförmiger Schaft mit einem Einlass und einem Auslass vorgesehen ist, durch den das Fluid hindurchgeleitet werden kann, wobei der Einlass des Schaftes teilweise in das auslassseitige Ende des Fittings hineinreicht, derart, dass das in das Fitting eintretende Fluid in Längsrichtung durch den Schaft strömt, welcher mit einem Flansch versehen ist; ein Ventilsitz mit einer Schürze vorgesehen ist, welche eine Innenfläche aufweist, die derart dimensioniert ist, dass sie gleitverschieblich um den Schaft passt und welche eine Außenfläche aufweist, die so dimensioniert ist, dass sie in den Auslass des rohrförmigen Fittings passt, um die radiale Position des Ventilsitzes zu fixieren, wobei der Ventilsitz außerdem eine Lippe aufweist, die so dimensioniert ist, dass sie den Ventilsitz in Längsrichtung am Auslass des rohrförmigen Fittings positioniert und zwischen dem Ventilsitz und dem Auslass des rohrförmigen Fittings eine Dichtung bildet; Einrichtungen vorgesehen sind, durch die der Ventilsitz zwangsläufig in Kontakt mit dem Fitting gehalten wird, um eine Verlagerung des Ventilsitzes in Längsrichtung und in radialer Richtung zu verhindern; ein Sprühkopf mit Befestigungseinrichtungen zum Befestigen des rohrförmigen Schaftes vorgesehen ist, wobei der Sprühkopf Auslasseinrichtungen umfasst und eine an den Ventilsitz angepasste Oberfläche besitzt; eine Feder vorgesehen ist, welche den Schaft umgibt und gegen den Flansch des Schaftes vorgespannt ist, um eine fest vorgegebene Vorspannkraft gegen den Ventilsitz zu erzeugen, wobei die Feder den Ventilsitz gegen die angepasste Oberfläche des Sprühkopfes drückt, sodass zwischen dem Ventilsitz und der angepassten Oberfläche des Ventilkopfes eine Dichtung gebildet wird, um die Fluidströmung an dieser Dichtung zu beschränken und wobei die Auslasseinrichtungen einen solchen Kanal für die Fluidströmung bilden, dass diese, wenn die Dichtung hergestellt ist, gemäß einem vorgegebenen Muster dispergiert bzw. versprüht wird; wobei eine auf den Sprühkopf ausgeübte Kraft, die ausreicht, um die Federvorspannung zu überwinden, den Sprühkopf von dem Ventilsitz trennt, wodurch die Dichtwirkung aufgehoben und ein Spülen der Auslasseinrichtungen durch das Fluid ermöglicht wird.

Die Patentschrift DE 101 16 051 B4 offenbart eine Sprühdüse für Wirbelschichtanlagen, bestehend aus einem Düsenkörper, einer Düsenkappe, mindestens einer Austrittsöffnung für eine mit Feststoffen beaufschlagte Flüssigkeit und aus mindestens einer Austrittsöffnung für ein Gas, wobei um die Düsenkappe eine flexible Reinigungskappe angeordnet ist und zwischen der Düsenkappe und der Reinigungskappe eine aus einem in dem Düsenkörper angeordneten Druckluftkanal bestehende Zuführung für eine druckluftbeaufschlagte Reinigungsluft angeordnet ist, wobei der Druckluftkanal über eine ringförmige Eindrehung in der Außenfläche des Düsenkörpers und mindestens eine Querbohrung in der Düsenkappe mit einer ringförmigen Eindrehung in der Außenfläche der Düsenkappe verbunden ist. Die Reinigungskappe liegt direkt eng an der Düsenkappe an. Über den Druckluftkanal erfolgt in einstellbaren unterschiedlichen Intervallen oder über einen größeren Zeitraum die Zuführung von druckluftbeaufschlagter Reinigungsluft. Die Reinigungsluft wird über die ringförmige Eindrehung und der Querbohrung der ringförmigen Eindrehung zugeführt. Über die ringförmige Eindrehung wird die Reinigungsluft über den gesamten Umfang zwischen der Düsenkappe und der Reinigungskappe zugeführt. Durch den Druckstoß der Reinigungsluft wölbt sich die aus elastischem Material bestehende Reinigungskappe nach außen, sodass die Reinigungsluft zwischen der Außenfläche der Düsenkappe und der Innenfläche der Reinigungskappe in Richtung der Austrittsöffnung der Sprühdüse geleitet wird. Die Reinigungsluft wird als Druckstrahl ringförmig von allen Seiten an den Düsenmund der Sprühdüse geleitet, sodass der Impuls des Strahles ohne Verluste direkt genutzt werden kann und Verwirbelungen vermieden werden. Entstehende Materialablagerungen im unmittelbaren Bereich der Austrittsöffnung in der Sprühdüse werden durch die Reinigungsluft weggeblasen.

In der DE 24 19 148 A1 ist eine eine Sprühmischdüse betreffende Zusatzvorrichtung offenbart, die eine kleine Wasserspritzdüse mit einer Bohrung von 0,1 bis 1,5 mm aufweist, die aus naher Entfernung auf die Mündung der Sprühmischdüse gerichtet ist und die selbst und/oder ihre Zuleitung mit der Sprühmischdüse zu einer Einheit fest verbunden ist.

Nachteilig an den vorgenannten technischen Lösungen ist es, dass diese im Stand der Technik genannten selbstreinigenden Düsen jeweils eine große Anzahl an Einzelteilen aufweisen, die zu komplexen, wartungsintensiven Düsen zusammengebaut werden, wodurch die gezeigten technischen Lösungen in ihrer Produktion und Wartung teuer sind. Zudem ist es möglich, dass trotz der Ablagerungen bzw. Anbackungen verhindernden technischen Ausgestaltung der Düsen Ablagerungen bzw. Anbackungen an den Düsen entstehen können.

Aufgabe der Erfindung ist es daher ein Verfahren zur Überwachung der der selbstreinigenden Düse bereitzustellen, die die Nachteile des Standes der Technik beseitigt.

Diese Aufgabe wird bei einer Düse der eingangs genannten Art dadurch gelöst, dass am Innenrohr oder am Außenrohr ein Inlay angeordnet ist, wobei das Inlay so angeordnet ist, dass es durch den aus der Austrittsöffnung des Innenrohrs austretenden zu versprühenden Stoff und/oder das aus der Austrittsöffnung des Außenrohrs ausströmende Gas in Schwingung versetzbar ist oder versetzt wird, um Ablagerungen im Austrittsbereich des zu versprühenden Stoffs und/oder des Gases zu minimieren oder zu verhindern, wobei ein mit einer Kontrolleinheit verbundener Sensor das Düsenmundstück auf Ablagerungen hin überwacht und Signale an die Kontrolleinheit übermittelt und die Kontrolleinheit bei einer durch den Sensor ermittelten Ablagerung im Austrittsbereich des zu versprühenden Stoffs und/oder des Gases ein Signal an eine Vorrichtung übermittelt.

Vorteilhafterweise werden durch das erfindungsgemäße Verfahren weitere Ablagerungen bzw. Anbackungen, die die Symmetrie und die Tröpfchengröße des Sprays beeinflussen, am Düsenmundstück im Bereich der Austrittsöffnungen des Innen- und Außenrohrs der selbstreinigenden Düse durch die Überwachung erkannt und durch geeignete Maßnahmen verhindert bzw. zumindest weiter minimiert, sodass es zu nicht erwünschten Prozessauswirkungen wie beispielsweise der Sprühtrocknung und/oder lokalen Überfeuchtung und Agglomeration, kommt.

Weitere vorteilhafte Ausgestaltungen des erfindungsgemäßen Verfahrens sind in den Unteransprüchen dargelegt.

Gemäß einer diesbezüglichen Fortbildung des erfindungsgemäßen Verfahrens erfolgt die Überwachung des Düsenmundstücks auf Ablagerungen durch einen außerhalb oder innerhalb der Düse angeordneten Sensor. Aufgrund der unterschiedlichen Prozessanforderungen ist es manchmal sinnvoll den Sensor innerhalb der Düse anzuordnen, insbesondere bei baulich beengten Verhältnissen, bspw. bei ein kleines Volumen aufweisenden Trommelcoatern oder dgl.. Optische Sensoren, bevorzugt Kameras, besonders bevorzugt High-Speed Kameras, überwachen bevorzugt das Düsenmundstück von außerhalb der Düse. Hierdurch wird ebenfalls ein sehr gutes Ergebnis erzielt.

Bevorzugt umfasst das Verfahren mehrere Sensoren. Insbesondere Sensoren, die unabhängig voneinander arbeiten. Durch die mehreren Sensoren, die vorzugsweise unabhängig voneinander sind und arbeiten ist es möglich die die Symmetrie und Tröpfchengröße negativ beeinflussenden Ablagerungen bzw. Anbackungen noch besser zu lokalisieren und identifizieren, sodass die am besten geeignetste Maßnahme, bspw. Vibration oder Puls, einleitbar ist.

Vorteilhafterweise übermittelt ein Sensor der Kontrolleinheit Signale übermittelt und die Kontrolleinheit beim Überschreiten eines Schwellenwerts ein Signal an die Vorrichtung. Der Sensor erfasst schon die kleinsten Ablagerungen am Düsenmundstück, also im Bereich der Austrittsöffnungen des zu versprühenden Stoffs und/oder des Gases. Um keine dauerhafte Reaktion durch den Sensor zu veranlassen kann dem Sensor ein Schwellenwert, z. B. ein Mindestwert an Ablagerungen bzw. Anbackungen, der für die Sprayqualität noch akzeptabel ist, vorgegeben werden. Wird der Schwellenwert überschritten, wird das Signal vom Sensor an die Kontrolleinheit übermittelt, sodass die Kontrolleinheit durch Übermittlung eines Signals an die Vorrichtung eine geeignete Gegenmaßnahme zum Entfernen der Ablagerungen veranlasst.

Ganz bevorzugt ist der Sensor ein optischer Sensor, insbesondere eine Kamera, besonders bevorzugt eine High-Speed Kamera, oder ein eine physikalische Messgröße erfassender Sensor, insbesondere ein Drucksensor oder Differenzdrucksensor. Durch die optischen Sensoren besteht die Möglichkeit die Verschmutzungen optisch zu erfassen. Mittels der eine physikalische Messgröße erfassenden Sensoren können bspw. der Massen- und somit auch der Volumenstrom des zu versprühenden Stoffs und/oder des Zerstäubergases aus dem Differenzdruck berechnet werden, sodass Rückschlüsse auf die Ablagerungen bzw. Anbackungen am Düsenmundstück gezogen werden können. Ablagerungen bzw. Anbackungen am Düsenmundstück führen zu einem Druckanstieg vor den Austrittsöffnungen im Fluidkanal oder Ringspalt und somit zu einer größeren Strömungsgeschwindigkeit des zu versprühenden Stoffs und/oder des Gases, sodass bei entsprechender Vorgabe von Schwellenwerten oder Toleranzbereichen (bspw. ± 10 % Abweichung) und deren Über bzw. Unterschreitung die Kontrolleinheit durch Übermittlung eines Signals an die Vorrichtung eine geeignete Gegenmaßnahme zum Entfernen der Ablagerungen veranlasst

Nach einer zusätzlichen Ausgestaltung des erfindungsgemäßen Verfahrens ein Signal von der Kontrolleinheit empfangende Vorrichtung eine Vibrationseinheit oder eine Pulsationseinheit ist. Hierbei ist die Vibrationseinheit mit der Düse verbunden, die beim Empfang eines Signals von der Kontrolleinheit die Düse zum in Vibration versetzt, sodass sich die Ablagerungen am Düsenmundstück lösen. Alternativ prägt die Pulsationseinheit auf den im Fluidkanal geführten zu versprühenden Stoff und/oder das im Ringspalt geführte Gas beim Empfang eines Signals von der Kontrolleinheit einen Puls auf, sodass sich die Ablagerungen am Düsenmundstück lösen. Der aufgeprägte Puls kann unterschiedliche Frequenzen aufweisen, insbesondere zwischen 1 Hz und 1500 Hz, bevorzugt zwischen 25 Hz und 250 Hz. Hierdurch werden die Ablagerungen bzw. Anbackungen am Düsenmundstück im Bereich der Austrittsöffnungen des Innen- und Außenrohrs verbessert gelöst und entfernt.

Nachfolgend wird die Erfindung anhand der beiliegenden Zeichnung näher erläutert. Es zeigen
- Figur 1: eine Düse gemäß dem Stand der Technik,
- Figur 2: einen Schnitt B-B gemäß Fig. 4 durch eine erste Ausführungsform einer Düse,
- Figur 3: eine Detailansicht eines Teils des Düsenmundstücks der ersten Ausführungsform der Düse gemäß Ausschnitt A von Figur 2,
- Figur 4: eine Draufsicht auf die erste Ausführungsform einer Düse gemäß Figur 2 mit einer die Achse X-X schneidenden Schnittebene B-B,
- Figur 5: einen Schnitt durch eine zweite Ausführungsform einer Düse mit einem Anbauteil im Ringspalt in Form eines Drallblechs zur Gasführung,
- Figur 6: einen Schnitt durch eine dritte Ausführungsform einer Düse mit einem Anbauteil in Form eines Drallblechs zur Gasführung im Ringspalt,
- Figur 7: einen Schnitt durch eine vierte Ausführungsform einer Düse,
- Figur 8: einen Schnitt durch eine fünfte Ausführungsform einer Düse,
- Figur 9: einen Schnitt durch eine sechste Ausführungsform einer Düse,
- Figur 10: einen Schnitt durch eine siebte Ausführungsform einer Düse,
- Figur 11: einen Schnitt durch eine Düse gemäß der ersten Ausführungsform, wobei die Düse eine in axialer Richtung verschiebbare Düsennadel zum Verschließen der Austrittsöffnungen der Düse aufweist,
- Figur 12: einen Schnitt durch eine Düse, wobei das Inlay und das Innenrohr eine einstückige innere Leitung der Düse ausbilden,
- Figur 13: einen Schnitt durch eine Düse, wobei das Inlay und das Innenrohr eine innere Leitung der Düse ausbilden und die bevorzugte Düse im Bereich des Düsenmundstücks zwischen Innen- und Außenrohr eine ihr Volumen veränderbare Vorrichtung aufweist, wobei die Vorrichtung in Fig. 13 eine Offen-Stellung der Düse zeigt,
- Figur 14: einen Schnitt durch eine Düse, wobei das Inlay und das Innenrohr eine innere Leitung der bevorzugten Düse ausbilden und die Düse im Bereich des Düsenmundstücks zwischen Innen- und Außenrohr eine ihr Volumen veränderbare Vorrichtung aufweist, wobei die Vorrichtung in Fig. 14 eine Schließ-Stellung der Düse darstellt,
- Figur 15: einen schematischen Aufbau eines ersten Verfahrens zur Überwachung des Düsenmundstücks einer ersten Ausführungsform der bevorzugten Düse und
- Figur 16: einen schematischen Aufbau eines zweiten Verfahrens zur Überwachung des Düsenmundstücks einer ersten Ausführungsform der bevorzugten Düse.

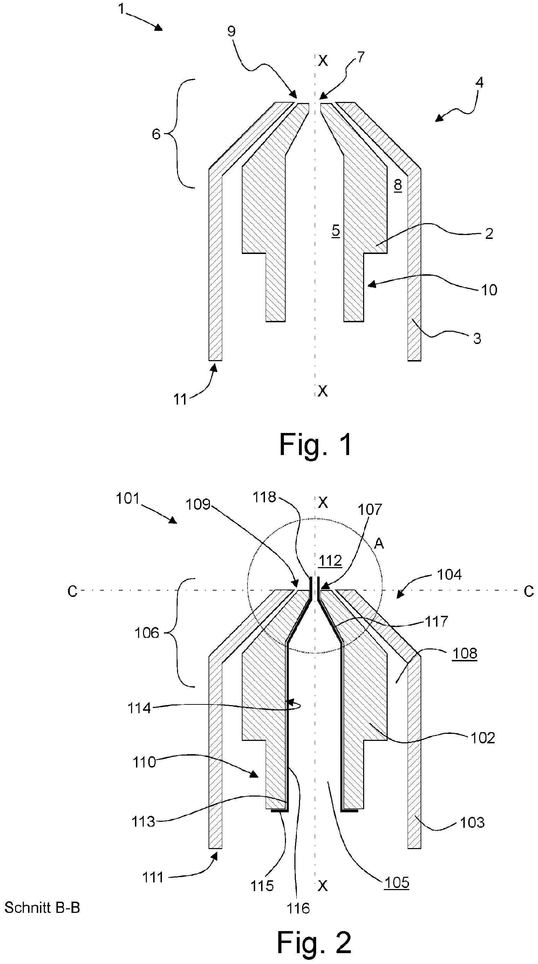

Die in den Fign. 1 bis 14 beschriebenen Ausführungsformen von Düsen sind nicht erfindungsgemäß und dienen lediglich der Veranschaulichung von unterschiedlichen Düsen, die alle für das erfindungsgemäße Verfahren verwendbar sind.

In Fig. 1 wird eine aus dem Stand der Technik bekannte Düse 1 dargestellt. Die Düse 1 umfasst einen ein Innenrohr 2 und ein Außenrohr 3 aufweisenden Düsenkörper 4. Das Innenrohr 2 und das Außenrohr 3 sind hierbei koaxial zu einer Achse X-X angeordnet.

Das Innenrohr 2 weist einen zur Zuführung für den zu versprühenden Stoff, bevorzugt einer Flüssigkeit, ganz besonders bevorzugt einer Dispersion, Suspension oder Emulsion, ausgebildeten Fluidkanal 5 auf. Dieser mündet im Bereich des Düsenmundstückes 6 in eine Austrittsöffnung 7 des Innenrohrs 2. Im der Austrittsöffnung 7 des Innenrohrs 2 abgewandten Bereich weist das Innenrohr 2 eine Anschlussstelle 10 für eine nicht dargestellte Zuführungsleitung für den zu versprühenden Stoff auf.

Das Außenrohr 3 ist zum Innenrohr 2 beanstandet angeordnet, wodurch sich ein Ringspalt 8 zur Zuführung für das Gas, insbesondere Zerstäubungsluft, ausbildet. Der Ringspalt 8 mündet im Bereich des Düsenmundstückes 6 in eine Austrittsöffnung 9 des Außenrohrs 3. Im der Austrittsöffnung 9 des Außenrohrs 3 abgewandten Bereich weist das Außenrohr 3 eine Anschlussstelle 11 für eine nicht dargestellte Zuführungsleitung für das Gas auf.

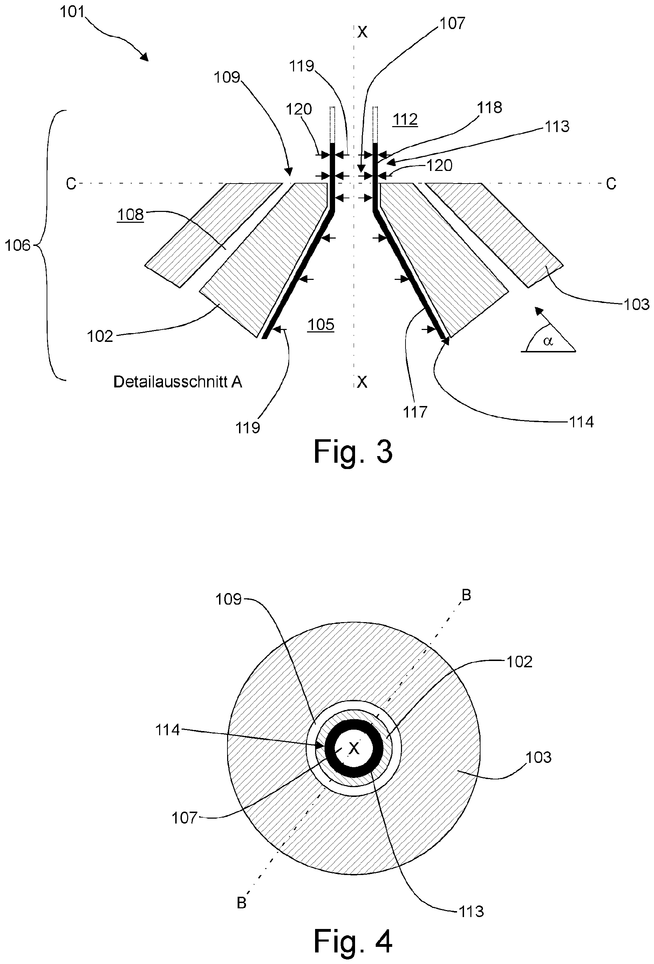

Fig. 2 zeigt einen Schnitt B-B gemäß Fig. 4 durch eine erste Ausführungsform einer Düse 101. Die Düse 101 umfasst, wie schon in Fig. 1 dargestellt, einen ein Innenrohr 102 und ein Außenrohr 103 aufweisenden Düsenkörper 104. Das Innenrohr 102 und das Außenrohr 103 sind koaxial zu einer Achse X-X angeordnet.

Das Innenrohr 102 weist einen Fluidkanal 105 zur Zuführung für den zu versprühenden Stoff, bevorzugt einer Flüssigkeit, ganz besonders bevorzugt einer Dispersion, Suspension oder Emulsion, auf. Dieser mündet im Bereich des Düsenmundstücks 106 in eine Austrittsöffnung 107 des Innenrohrs 102. In dem der Austrittsöffnung 107 des Innenrohrs 102 abgewandten Bereich weist das Innenrohr 102 eine Anschlussstelle 110 für eine nicht dargestellte Zuführungsleitung für den zu versprühenden Stoff auf.

Das Außenrohr 103 ist zum Innenrohr 102 beanstandet angeordnet, wodurch sich ein Ringspalt 108 zur Zuführung für das Gas, insbesondere Zerstäubungsluft, ausbildet. Der Ringspalt 108 mündet im Bereich des Düsenmundstückes 106 in eine Austrittsöffnung 109 des Außenrohrs 103. Bevorzugt sind die Austrittsöffnung 107 des Innenrohrs 102 und die Austrittsöffnung 109 des Außenrohrs 103 konzentrisch zueinander angeordnet. Hierdurch wird sichergestellt, dass die Strömungsverhältnisse des im Ringspalt 108 geförderten Gases optimal, insbesondere gleichmäßig, ausgebildet sind, sodass Symmetrie und Tröpfchengröße des mittels der Düse 101 erzeugten Sprays genau auf die Anforderungen des Herstellungs- und/oder Sprühprozesses, insbesondere eines Herstellungs- und/oder Sprühprozesses für Granulate, Tabletten oder dgl., abgestimmt sind. Im der Austrittsöffnung 109 des Außenrohrs 103 abgewandten Bereich ist eine Anschlussstelle 111 für eine nicht dargestellte Zuführungsleitung für das Gas gegeben. Bevorzugterweise liegen die Austrittsöffnungen 107, 109 in einer Ebene C-C und münden in den Austrittsbereich 112 der Düse 101. Im Austrittsbereich 112 wird durch das Aufeinandertreffen von zu versprühendem Stoff und Zerstäubergas das Spray erzeugt, das die Partikel beschichtet. Vorteilhafterweise werden sowohl die Symmetrie als auch die Tröpfchengröße des Sprays während des Herstellungs- und/oder Sprühprozesses optimal eingestellt.

Das Innenrohr 102 weist ein Inlay 113 auf. Das Inlay 113 ist in Fig. 2 in seiner bevorzugten Position an einer Innenwandung 114 des Innenrohrs 102 angeordnet. Das Inlay 113 ist bevorzugt aus einem Polymer, besonders bevorzugt aus einem synthetischen Polymer, ganz besonders bevorzugt aus einem Silikon, hergestellt. Polymere sind vielseitige Materialien, die bei gleichzeitiger hoher Robustheit kostengünstig herstellbar sind und je nach Polymer sehr temperaturbeständig sein können. Die Polymere, insbesondere die synthetischen Polymere, sind daher sehr gut als Inlay 113 für die unterschiedlichsten Herstellungs- und/oder Sprühprozesse geeignet. Die bevorzugte Düse 101 ist aufgrund der Austauschbarkeit des Inlays 113 in den unterschiedlichsten Herstellungs- und/oder Sprühprozessen einsetzbar.

Das Inlay 113 weist in der ersten Ausführungsform der Düse 101 vier Teilabschnitte 115 bis 118 auf. Teilabschnitt 115 sichert das Inlay 113 in der Düse 101, sodass das Inlay 113 während des gesamten Herstellungs- und/oder Sprühprozesses in der Düse 101 angeordnet ist. Vorteilhafterweise wird das Inlay 113 mit dem Innenrohr 102 so verbunden, dass dieses dort fixiert ist. Die Teilabschnitte 116 und 117 sind in der Düse 101 zwischen dem Teilabschnitt 115 und dem Teilabschnitt 118 angeordnet und liegen an der Innenwandung 114 des Innenrohrs 102 an. Der Teilabschnitt 118 des Inlays 113 ragt zumindest teilweise aus der Austrittsöffnung 107 des Innenrohrs 102 heraus. Durch die Möglichkeit der Verstellung des Haltepunkts des Teilabschnitts 115 am Innenrohr 102 kann die Länge des aus der Austrittsöffnung 107 des Innenrohrs 102 herausragenden Teilabschnitts 118 des Inlays 113 verändert werden.

Fig. 3 zeigt eine Detailansicht eines Teils des Düsenmundstücks 106 der ersten Ausführungsform der Düse 101 gemäß Ausschnitt A von Fig. 2. Das Innenrohr 102 und das Außenrohr 103 sind koaxial um die Achse X-X angeordnet, so dass die Austrittsöffnungen 107, 109 konzentrisch um den Schnittpunkt der Achse X-X mit der Ebene C-C angeordnet sind. Die Austrittsöffnung 107 des Innenrohrs 102 und die Austrittsöffnung 109 des Außenrohrs 103 liegen zudem in der Ebene C-C und münden in den Austrittsbereich 112 der Düse 101. Im Austrittsbereich 112 wird durch das Aufeinandertreffen von zu versprühendem Stoff und Zerstäubergas das Spray erzeugt, das die Partikel beschichtet. Vorteilhafterweise werden sowohl die Symmetrie als auch die Tröpfchengröße des Sprays während des Herstellungs- und/oder Sprühprozesses optimal eingestellt.

Der Teilabschnitt 117 des Inlays 113 liegt an der Innenwandung 114 des Innenrohrs 102 der Düse 101 an und ist mit dem Teilabschnitt 118 des Inlays 113 verbunden. Der Teilabschnitt 118 des Inlays 113 ragt zumindest teilweise aus der Austrittsöffnung 107 des Innenrohrs 102 der Düse 101 heraus. Bevorzugt ist der Teilabschnitt 118 des Inlays 113 längenveränderbar. Die Längenveränderbarkeit ist durch die an den Teilabschnitt 118 angrenzende, gepunktete Linie dargestellt. Die Längenveränderung kann entweder durch das Austauschen des Inlays 113 direkt erfolgen, durch Verstellung des Haltepunkts des Inlays 113 am Innenrohr 102 und/oder eine sonstige Änderung der Anordnung des Inlays 113 in der Düse 101.

Durch den zu versprühenden Stoff, bevorzugt eine Flüssigkeit, besonders bevorzugt eine Dispersion, Suspension oder Emulsion, der durch das ein Inlay 113 aufweisendes Innenrohr 102 im Fluidkanal 105 in Richtung Austrittsöffnung 107 gefördert wird, wirkt ein Innendruck 119 auf das Inlay 113. Durch den auf das Inlay 113 wirkenden Innendruck 119 wird das Inlay 113 gegen die Innenwandung 114 des Innenrohrs 102 gepresst. Im Bereich des Düsenmundstücks 106, insbesondere im Bereich der Austrittsöffnung 107 des Innenrohrs 102, wirkt auf den Teilabschnitt 118 des Inlays 113 durch den auf das Inlay 113 wirkenden Innendruck 119 ebenfalls eine das Inlay 113 von der Achse X-X wegbewegende Kraft.

Zudem wirkt auf den aus der Austrittsöffnung 107 des Innenrohrs 102 zumindest teilweise herausragenden Teilabschnitt 118 des Inlays 113 eine in Richtung der Achse X-X wirkende Kraft 120. Die in Richtung der Achse X-X wirkende Kraft 120 wird von dem aus dem Ringspalt 108 aus der Austrittsöffnung 109 austretenden Gas, insbesondere Zerstäuberluft, verursacht.

Hierdurch wird das zumindest teilweise aus der Austrittsöffnung 107 des Innenrohrs 102 herausragende Inlay 113 durch die aus der Düse 101 in den Austrittsbereich 112 der Düse 101 austretende Flüssigkeit und/oder das aus der Düse 101 in den Austrittsbereich 112 der Düse 101 austretende Gas, insbesondere Zerstäuberluft, bewegt, vorteilhafterweise hochfrequent. Durch diese vorteilhafterweise hochfrequente Bewegung des zumindest teilweise aus der Austrittsöffnung 107 des Innenrohrs 102 herausragenden Inlays 113 werden Ablagerungen der zu verdüsenden Flüssigkeit am Düsenmundstück 106, insbesondere im Austrittsbereich 112, bzw. wird deren Agglomeration verhindert. Die Symmetrie und die Tröpfchengröße des Sprays wird somit während des Herstellungs- und/oder Sprühprozesses nicht beeinflusst, sodass es nicht zu einer unerwünschten Sprühtrocknung und/oder zu lokaler Überfeuchtung und Agglomeration kommt.

Die Vibrationsfrequenz des Teilabschnitts 118 des Inlays 113 kann zusätzlich zum Beispiel durch die Längenveränderbarkeit des Teilabschnitts 118 des Inlays 113 verändert werden. Hierdurch kann direkt auf den Herstellungs- bzw. Sprühprozess Einfluss genommen werden. Eine weitere Änderung der Vibrationsfrequenz ist bspw. durch Anpassung der Drücke von zu versprühendem Stoff und Gas möglich. Auch eine Veränderung des Anströmwinkels α des Gases, insbesondere der Zerstäuberluft, bewirkt eine Änderung der Vibrationsfrequenz des Inlays 113 und hat somit Einfluss auf das Spray und dessen Qualität, insbesondere hinsichtlich der Symmetrie und der Tröpfchengrö-ße. Zur Änderung des Anströmwinkels α des Gases ist bspw. die Anordnung von Außenrohr 103 und zu Innenrohr 102 zueinander anzupassen, insbesondere im Bereich des Düsenmundstücks 106. Darüber hinaus kann die Anströmung des Inlays 113 auch die durch eine veränderte Strömungsführung im Ringspalt 108 angepasst werden. Ganz bevorzugt wird lediglich der Ringspalt 108 angepasst, sodass dieser einen anderen Anströmwinkel in Bezug auf den Teilabschnitt 118 des Inlays 113 aufweist.

Fig. 4 zeigt eine Draufsicht auf die erste Ausführungsform einer Düse 101 mit einer die Achse X-X schneidenden Schnittebene B-B. Das Innenrohr 102 und das Außenrohr 103 sind koaxial zur Achse X-X ausgerichtet, sodass die Austrittsöffnungen 107, 109 für den zu versprühen Stoff, insbesondere eine Flüssigkeit, ganz besonders bevorzugt eine Dispersion, bzw. für das Gas, insbesondere Zerstäuberluft, konzentrisch zueinander um die Achse X-X angeordnet sind. An der Innenwandung 114 des Innenrohrs 102 ist das Inlay 113 angeordnet.

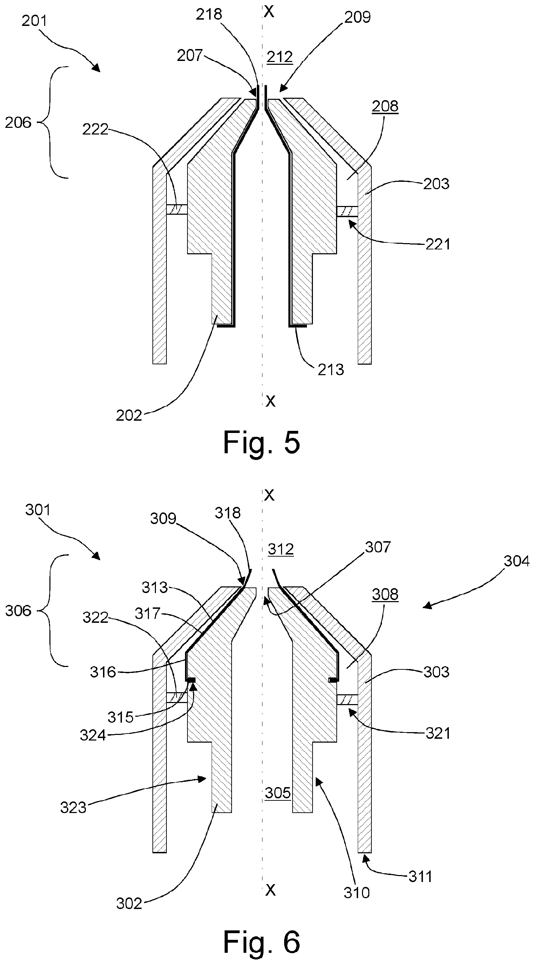

In Fig. 5 ist ein Schnitt durch eine zweite Ausführungsform einer Düse 201 mit einem optionalen Anbauteil 220 im Ringspalt 208 in Form eines Drallblechs zur Gasführung dargestellt.

Die Düse 201 gemäß der zweiten Ausführungsform entspricht in ihrem grundlegenden Aufbau der in den Fign. 2 bis 4 gezeigten ersten Ausführungsform der Düse 101. Der Unterschied zwischen den beiden Ausführungsformen ist, dass die Düse 201 im Gegensatz zur Düse 101 ein optionales Anbauteil 221 aufweist, welches in Form eines Drallblechs zur Gasführung ausgebildet ist. In der vorliegenden zweiten Ausführungsform der Düse 201 weist das Anbauteil 221 Öffnungen 222 auf, die winklig zum parallel zum Außenrohr 203 strömenden Gas, insbesondere einer Zerstäuberluft, ausgebildet sind. Hierdurch erfährt das im Ringspalt 208 strömende Gas einen Drall um die Achse X-X. Durch den Drall um die Achse X-X kann die Anströmung und das Bewegungsverhalten und somit auch die Vibrationsfrequenz des zumindest teilweise aus der Austrittsöffnung 207 des Innenrohrs 202 herausragenden Inlays 213 beeinflusst werden.

Das Anbauteil 221 kann ebenso in Form von Drallkörpern, z. B. Strömungsleitblechen oder dergleichen, zur Gasführung ausgebildet sein. Das Anbauteil 222 ist mit dem Innenrohr 202 und dem Außenrohr 203 bevorzugt fest verbunden. Hierdurch wird die Stabilität der Düse 201 im Bereich des Düsenmundstücks 206 erhöht. Zudem wird durch den Einbau eines Anbauteils 221 in Form von Drallkörpern, Drallblechen oder dergleichen die Strömungsführung des Gases, insbesondere der Zerstäuberluft, am Düsenmundstück 206, insbesondere im Austrittsbereich 212 der Düse 201 beeinflusst, wodurch das Bewegungsverhalten des zumindest teilweise aus dem Innenrohr 202 herausragenden Inlays 213, insbesondere die Vibrationsfrequenz des Teilabschnitts des Inlays 213, veränderbar ist. Die Vibrationsfrequenz ist so verbessert auf den Herstellungs- und/oder Sprühprozess einstellbar. Zusätzlich sind hierdurch die Sprühsymmetrie und die Tröpfchengröße des Sprays, d. h. des zu verdüsenden Stoffs, bevorzugt einer Flüssigkeit, ganz besonders bevorzugt einer Dispersion, Emulsion oder Suspension, direkt einstellbar. Des Weiteren wird das Innenrohr 202 beim Einbau im Außenrohr 203 geführt und stets in der gewünschten Position, in Fig. 5 in einer konzentrischen Position um die Achse X-X, gehalten. Zudem verhindert das Anbauteil 221 ein Schwingen des Innenrohrs 102, was zu einer Veränderung sowohl der Austrittsöffnungen 207 des Innenrohrs 202 als auch der Austrittsöffnungen 209 des Außenrohrs 203 führt, was die Strömungsverhältnisse am Düsenmundstück 206, insbesondere im Austrittsbereich 212 der Düse 201 ändert und somit auch die Spraysymmetrie und die Tröpfchengröße des Sprays beeinflusst.

Bevorzugt weist das zumindest teilweise aus der Austrittsöffnung 207 des Innenrohrs 202 herausragende Inlay 213 eine variierbare Wandstärke auf. Die Wandstärke des Inlays 213, insbesondere des aus dem Innenrohr 202 herausragenden Teilabschnitts 218, kann an den zu versprühenden Stoff, bevorzugt eine Flüssigkeit, besonders bevorzugt eine Dispersion, Emulsion oder Suspension, angepasst werden, wodurch das Sprühverhalten, vorzugsweise die Spraysymmetrie und die Einstellung der Tröpfchengröße, der Düse 201 optimiert werden kann. Auch an abrasive zu versprühende Stoffe kann so das Inlay 213 angepasst werden. Durch die Änderung der Wandstärke bei gleicher Länge des zumindest teilweise aus dem Innenrohr 202 herausragenden Inlays 213 oder durch Anpassung der Länge des Inlays 213 bei gleichbleibender Wandstärke des Inlays 213 wird das Schwingungsverhalten des zumindest teilweise aus der Austrittsöffnung 207 herausragenden Teilabschnitts 218 verändert, wodurch das verwendete Inlay 213 speziell an den jeweiligen verfahrenstechnischen Prozess anpassbar ist. Vorteilhafterweise wird das Inlay 213 mit dem Innenrohr 202 so verbunden, dass dieses dort fixiert ist.

Fig. 6 zeigt einen Schnitt durch eine weitere, dritte Ausführungsform einer Düse 301 mit einem optionalen Anbauteil 321 im Ringspalt 308 in Form eines Drallblechs zur Gasführung.

Die Düse 301 umfasst einen ein Innenrohr 302 und ein Außenrohr 303 aufweisenden Düsenkörper 304, wobei das Innenrohr 302 und das Außenrohr 303 koaxial zu einer Achse X-X ausgerichtet sind.

Das Innenrohr 302 weist einen zur Zuführung für den zu versprühenden Stoff ausgebildeten Fluidkanal 305 auf. Dieser mündet im Bereich des Düsenmundstückes 306 in eine Austrittsöffnung 307 des Innenrohrs 302. Im der Austrittsöffnung 307 des Innenrohrs 302 abgewandten Bereich weist das Innenrohr 302 eine Anschlussstelle 310 für eine nicht dargestellte Zuführungsleitung für den zu versprühenden Stoff, bevorzugt eine Flüssigkeit, ganz besonders bevorzugt eine Dispersion, Emulsion oder Suspension, auf.

Das Außenrohr 303 ist zum Innenrohr 302 beabstandet angeordnet, wodurch sich ein Ringspalt 308 zur Zuführung für das Gas, insbesondere Zerstäubungsluft, ausbildet. Der Ringspalt 308 mündet im Bereich des Düsenmundstückes 306 in eine Austrittsöffnung 309 des Außenrohrs 303. Im der Austrittsöffnung 309 des Außenrohrs 303 abgewandten Bereich weist das Außenrohr 303 eine Anschlussstelle 311 für eine nicht dargestellte Zuführungsleitung für das Gas auf.

Zwischen dem Innenrohr 302 und dem Außenrohr 303 ist ein Öffnungen 322 aufweisendes Anbauteil 321 angeordnet. Das Anbauteil 321 verbindet Innenrohr 302 und Außenrohr 303 bevorzugt fest miteinander. Durch das Anbauteil 321 wird dem durch den Ringspalt 308 strömenden Gas, insbesondere Zerstäuberluft, ein Drall aufgeprägt. Mittels des Dralls wird die Frequenz des zumindest teilweise aus der Austrittsöffnung 309 des Außenrohrs 303 herausragenden Inlays 313 beeinflusst. Das Inlay 313 ist an der Außenwandung 323 im Ringspalt 308 angeordnet und liegt an der Außenwandung 323 an.

Das zumindest teilweise aus der Austrittsöffnung 309 des Außenrohrs 303 in den Austrittsbereich 312 herausragende Inlay 313 weist vier Teilabschnitte 315, 316, 317 und 318 auf. Teilabschnitt 315 ist in einer an der Außenwandung 323 angeordneten Nut 324 fixiert, bspw. verklemmt. Die Teilabschnitte 316 und 317 verbinden die Teilabschnitte 315 und 318. Die Länge des Inlays 313 ist veränderbar, insbesondere die Länge des Teilabschnitts 318 des Inlays 313 ist an die Parameter des Herstellungs- und/oder Sprühprozesses anpassbar. Zudem ist die Wandstärke des zumindest teilweise aus der Austrittsöffnung 309 des Außenrohrs 303 in den Austrittsbereich 312 ragenden Inlays 313, insbesondere die Wandstärke des Teilabschnitts 318 des Inlays 313, an die verfahrenstechnischen Prozessparameter adaptierbar. In Fig. 6 nimmt die Wandstärke des Inlays 313 von Teilabschnitt 315 zu Teilabschnitt 318 hin ab.

Das zumindest teilweise aus der Austrittsöffnung 309 des Außenrohrs 303 in den Austrittsbereich 312 herausragende Inlay 313 wird durch den aus der Düse 301 austretenden zu versprühenden Stoff, insbesondere eine Flüssigkeit, und/oder das aus der Düse 301 austretende Gas, insbesondere Zerstäuberluft, insbesondere hochfrequent bewegt. Durch die insbesondere hochfrequente Bewegung bzw. Schwingung des zumindest teilweise aus der Austrittsöffnung 309 des Außenrohrs 303 in den Austrittsbereich 312 herausragenden Inlays 313 entstehen am Inlay 313 Vibrationen mit einer bestimmten Frequenz, wodurch ein Anbacken und/oder Anhaften des zu verdüsenden Stoffs, bevorzugt einer Flüssigkeit, ganz besonders bevorzugt einer Dispersion, Emulsion oder Suspension, was zu Ablagerungen am Düsenmundstück 306 führt, verhindert wird. Durch das Verhindern von Ablagerungen am Düsenmundstück 306 im Austrittsbereich 312 und/oder durch das Verhindern von Agglomeration des zu versprühenden Stoffs wird die Symmetrie und die Tröpfchengröße des Sprays während des Herstellungs- und/oder Sprühprozesses nicht beeinflusst, sodass es nicht zu einer unerwünschten Sprühtrocknung und/oder zu lokaler Überfeuchtung und Agglomeration kommt.

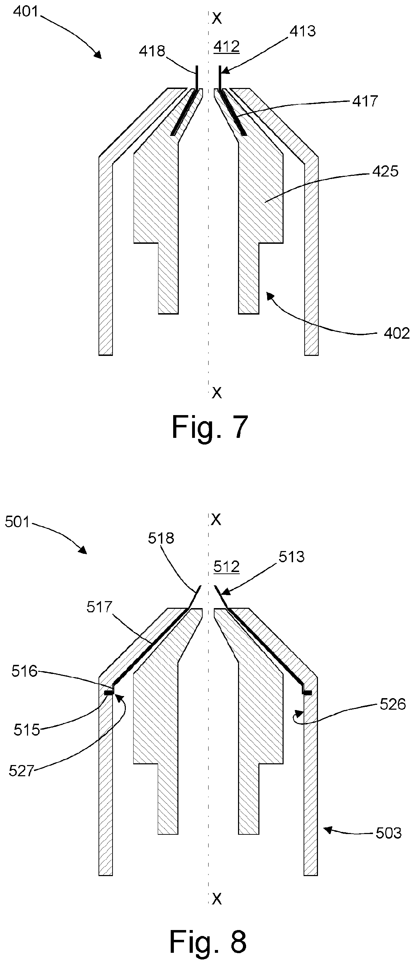

Die Fign. 7 bis 10 zeigen weitere vier Ausführungsformen der Düse 401, 501, 601, 701 als Schnittdarstellung, deren Bauform sich im Allgemeinen nicht von der ersten Ausführungsform der Düse 101 unterscheidet. Im Speziellen unterscheiden sich die Ausführungsformen von der ersten Ausführungsform der Düse 101 dadurch, dass das Inlay 413, 513, 613 und 713 an einer anderen Position am Innenrohr 402, 502, 602, 702 oder Außenrohr 403, 503, 603, 703 angeordnet ist. Im Folgenden werden die vier Ausführungsformen der Düse 401, 501, 601, 701 näher erläutert.

Hierbei ist in Fig. 7 ein Schnitt durch eine vierte Ausführungsform einer Düse 401 dargestellt. Das Inlay 413 ist in der vierten Ausführungsform der Düse 401 in einer Wandung 425 des Innenrohrs 402 angeordnet und dessen Teilabschnitt 418 ragt in den Austrittsbereich 412 der Düse 401 hinein. Das Inlay 413 weist gemäß der vierten Ausführungsform zwei Teilabschnitte 417 und 418 auf, wobei der Teilabschnitt 417 der Befestigung des Inlays 413 in der Wandung 424 des Innenrohrs 402 dient. Vorteilhafterweise wird das Inlay 413 in der Wandung 425 des Innenrohr 402 verklemmt oder dgl., sodass dieses dort fixiert ist.

In Fig. 8 ist ein Schnitt durch die fünfte Ausführungsform einer Düse 501 gezeigt. Entsprechend der Fig. 8 ist das Inlay 513 in der fünften Ausführungsform der Düse 501 an einer Innenwandung 526 des Außenrohrs 503 angeordnet. Das Inlay 513 weist hierbei vier Teilabschnitte 515, 516, 517 und 518 auf, wobei der Teilabschnitt 518 aus einer Austrittsöffnung 509 eines Außenrohrs 503 zumindest teilweise in einen Austrittsbereich 512 ragt. Das Inlay 513 ist mittels des Teilabschnitts 515 in einer Nut 527 in der Innenwandung 526 des Außenrohrs 503 angeordnet und wird dort bspw. durch verpressen fixiert.

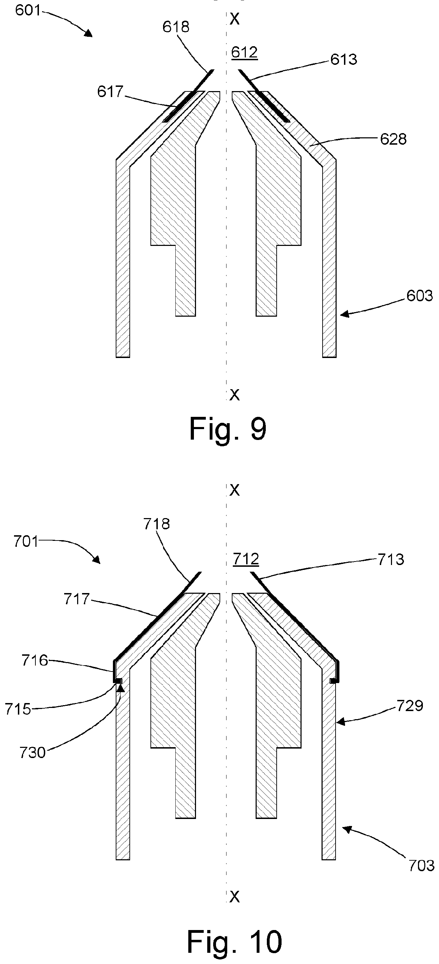

In Fig. 9 ist ein Schnitt durch eine sechste Ausführungsform einer Düse 601 dargestellt, wobei das Inlay 613 in der sechsten Ausführungsform der Düse 601 in einer Wandung 628 des Außenrohrs 603 angeordnet ist. Das Inlay 613 ist hierbei in einer Wandung 628 des Außenrohrs 603 angeordnet und dessen Teilabschnitt 618 ragt in den Austrittsbereich 612 der Düse 601 hinein. Das Inlay 613 weist gemäß der sechsten Ausführungsform zwei Teilabschnitte 617 und 618 auf, wobei der Teilabschnitt 617 der Befestigung des Inlays 613 in der Wandung 628 des Außenrohrs 603 dient. Vorteilhafterweise wird das Inlay 613 in der Wandung 628 des Außenrohrs 603 verklemmt oder dgl., sodass dieses dort fixiert ist.

Fig. 10 zeigt eine siebte Ausführungsform der Düse 701, wobei das Inlay 713 an einer Außenwandung 729 des Außenrohrs 703 angeordnet ist. Entsprechend der Fig. 10 ist das Inlay 713 in der siebten Ausführungsform der Düse 701 an einer Außenwandung 729 des Außenrohrs 703 angeordnet. Das Inlay 713 weist hierbei vier Teilabschnitte 715, 716, 717 und 718 auf, wobei der Teilabschnitt 718 zumindest teilweise in einen Austrittsbereich 712 ragt. Das Inlay 713 ist mittels des Teilabschnitts 715 in einer Nut 730 in der Außenwandung 729 des Außenrohrs 703 angeordnet und wird dort fixiert, bspw. verklemmt oder verpresst.

Alle Ausführungsformen 101 bis 701 können ein optionales Anbauteil 101 bis 701 zur Strömungsführung im Ringspalt 108 bis 708 aufweisen. Des Weiteren besteht die Möglichkeit der Anordnung eines Inlays 113 bis 713 am Innenrohr 102 bis 702 und eines zusätzlichen Inlays 113 bis 713 am Außenrohr 103 bis 703, sodass die Düsen 101 bis 701 zwei Inlays 113 bis 713 aufweisen.

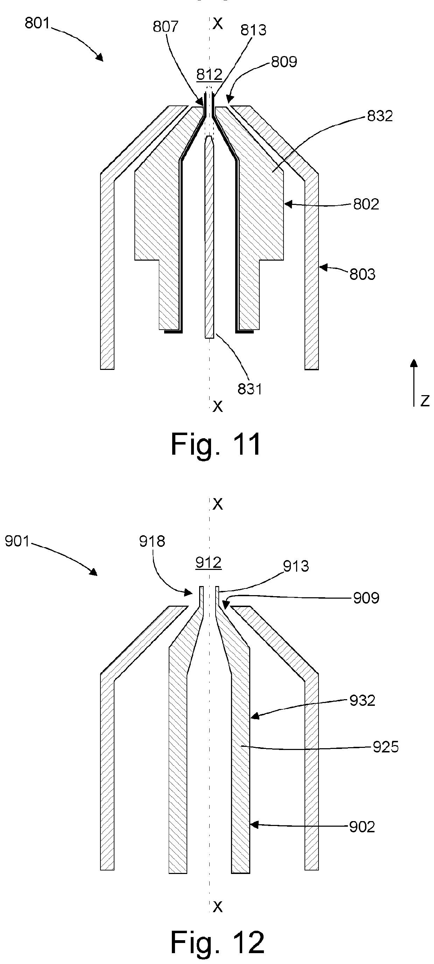

Fig. 11 stellt einen Schnitt durch eine Düse 801 entsprechend der ersten Ausführungsform dar, wobei die Düse 801 gemäß Fig. 11 eine in axialer Richtung der Achse X-X verschiebbare Düsennadel 831 zum Verschließen der Austrittsöffnung 807 des Innenrohrs 802 der Düse 801 aufweist. Durch das axiale Verschieben der Düsennadel 831 in Z-Richtung entlang der Achse X-X aus einer Ausgangsposition gemäß Fig. 11 in eine gestrichelt dargestellte Endposition wird die das Inlay 813 aufweisende Austrittsöffnung 807 des Innenrohrs 802 der Düse 801 verschlossen. Hierdurch wird der Austritt an zu versprühendem Stoff aus der Düse 801 verhindert. Zudem besteht die Möglichkeit, dass sich neben der Düsennadel 831 auch das Innenrohr 802 in Z-Richtung verschiebt, sodass sowohl die Austrittsöffnung 807 des Innenrohrs 802 der Düse 801 als auch die Austrittsöffnung 809 des Außenrohrs 803 der Düse 801 verschlossen werden. Auch ein Aufweiten des Innenrohr 802 durch die Düsennadel 831 ist möglich. Hierdurch wird erreicht, dass bspw. im Falle der Befüllung eines Granulators, eines Coaters, insbesondere eines Trommelcoaters, oder eines Fluidisierungsapparates keine Pellets oder Partikel in die Austrittsöffnungen 807, 809 der Düse 801 eindringen können und diese somit schon vor dem Beginn des Herstellungsprozesses verstopft. Vorzugsweise ist hierbei das Innenrohr 802 und das Inlay 813 einteilig als Leitung, bevorzugt in Form eines elastischen Materials, vorzugsweise eines Silikons, ausgebildet. Des Weiteren wird hierdurch verhindert, dass sich durch Verschieben der Düsennadel 831 das Inlay 813 gegenüber dem Innenrohr 802 verschiebt.

In Fig. 12 wird ein Schnitt durch eine Düse 901 gezeigt, wobei das Inlay 913 und das Innenrohr 902 der Düse 901 einstückig als Leitung 932 ausbildet sind. Das Inlay 913 und das Innenrohr 902 können jedoch ebenso als zwei separate Bauteile ausgebildet sein. Gemäß dieser Ausführungsform bilden das Inlay 913 und das Innenrohr 902 die innere Leitung 929 aus. Diese ist bevorzugt aus einem elastischen Material, vorzugsweise aus einem Polymer, insbesondere einem Silikon, hergestellt. Vorteilhafterweise ist es hierdurch noch einfacher möglich die den zu versprühenden Stoff aufweisende innere Leitung 932 der Düse 901 auszutauschen. Zudem besteht die Möglichkeit die innere Leitung als Wegwerfartikel auszugestalten, was bspw. in der Pharmaindustrie bei einem Wechsel des zu versprühenden Stoffs, aufgrund eines Produktwechsels zu erheblichen Vorteilen und einer deutlichen Vereinfachung des Arbeitsprozesses im Vergleich zu einer Reinigung des Innenrohrs 902 führt.

Gemäß Fig. 12 sind insbesondere die aus der Austrittsöffnung 909 des Außenrohrs 903 in den Austrittsbereich 912 hineinragenden Teilabschnitte 918 mit einer sehr geringen Wandstärke ausgebildet. Die Wandung 925 des Innenrohrs 902 ist vorteilhafterweise aus Gründen der Stabilität des Innenrohrs 902 mit einer stärkeren Wandstärke ausgebildet als der Teilabschnitt 918. Ganz besonders bevorzugt werden die stark beanspruchten Wandabschnitte ebenfalls verstärkt ausgebildet, beispielsweise durch ein an dieser Stelle faserverstärktes Polymer oder dgl..

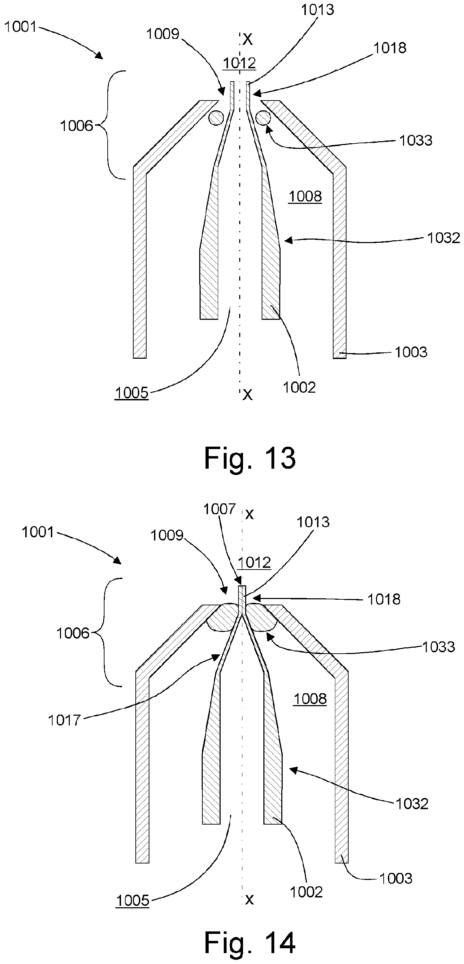

Die Fign. 13 und 14 zeigen eine weitere bevorzugte Ausführungsform einer Düse 1001 mit einer ihr Volumen veränderbaren Vorrichtung 1033.

Fig. 13 zeigt einen Schnitt durch eine bevorzugte Düse 1001, wobei das Inlay 1013 und das Innenrohr 1002 eine Leitung 1032, bevorzugt einstückig, der Düse 1001 ausbilden. Die Leitung 1032 ist zumindest teilweise aus einem elastischen Material, insbesondere einem Polymer und ganz bevorzugt aus einem Silikon, ausgebildet und im Ringspalt 1008 zwischen Innenrohr 1002 und Außenrohr 1003 ist im Bereich des Düsenmundstücks 1006 eine ihr Volumen veränderbare Vorrichtung 1033 angeordnet, insbesondere ein aufblasbarer Pressluftring oder dgl..

Die ihr Volumen veränderbare Vorrichtung 1033, insbesondere der Pressluftring, weist zumindest einen hier nicht dargestellten Einlass für eine Fluidzufuhr und zumindest einen hier nicht dargestellten Auslass für eine Fluidabfuhr auf. Hierdurch ist das Volumen der Vorrichtung 1033 durch Fluidzufuhr oder Fluidabfuhr veränderbar, nämlich vergrößerbar bzw. verkleinerbar, wodurch die Vorrichtung 1033 von einer beispielhaft in Fig. 13 gezeigten Offen-Stellung in eine in Fig. 14 gezeigte Schließ-Stellung verbringbar ist oder verbracht wird und umgekehrt. Die Schließ-Stellung ist stets gegeben, sobald das Innenrohr 1002 durch die Vorrichtung 1033 geschlossen ist, unabhängig vom Öffnungsgrad des von dem Gas, insbesondere der Zerstäuberluft, durchströmten Ringspalts 1008. In der in Fig. 13 gezeigten Offen-Stellung ist zum einen der Ringspalt 1008 für das Gas und zum anderen der Fluidkanal 1005 für den zu versprühenden Stoff, insbesondere eine Flüssigkeit oder Dispersion, durchströmbar, wodurch das Gas den zu versprühenden Stoff am Austritt zerstäuben kann. Vorteilhafterweise hat die Vorrichtung 1033 auf die Strömung des durch den Ringspalt 1008 strömenden Gases keinen bzw. einen vernachlässigbaren Einfluss.

Es gilt stets zu beachten, dass der zu versprühende Stoff, insbesondere die Flüssigkeit, nicht unzerstäubt aus der Düse 1001 austreten soll. Hierzu ist zu gewährleisten, dass zu Beginn eines jeden Sprühvorgangs zuerst das Gas, insbesondere das Zerstäubergas, durch den Ringspalt 1008 und somit aus der Düse 1001 strömt und anschließend der zu versprühende Stoff, insbesondere die Flüssigkeit. Beim Beenden des Sprühvorgangs ist zuerst die Zufuhr des zu versprühenden Stoffs zu stoppen bzw. zu unterbrechen und anschließend die des Gases. Hierdurch wird zu jederzeit sichergestellt, dass bei einem Sprühvorgang der zu versprühende Stoff zerstäubt wird und am Ende eines jeden Sprühvorgangs kein zu versprühender Stoff unzerstäubt aus der Düse tropft, ggf. auf zu behandelndes (beschichtendes) Material. Beim Starten bzw. Beenden eines Sprühvorgang kann dies bspw. durch ein automatisches "Vorlaufen" bzw. "Nachlaufen" des Gases gewährleistet werden.

Alle Stellungen, in denen der Ringspalt 1008 und/oder der Fluidkanal 1005 von Fluid durchströmbar ist, wird als Offen-Stellung bezeichnet. Hierdurch ist es möglich eine stufenlose Einstellung des Volumenstroms mit einem Durchfluss von 0 % und 100 % für das Gas und/oder für den zu versprühenden Stoff bereitzustellen, wobei die Einstellung der Volumenströme bei nur einer Vorrichtung 1033 abhängig voneinander ist. Bei der Verwendung mehrerer, insbesondere zweier Vorrichtungen 1033,nämlich jeweils für den im Fluidkanal 1005 geförderten zu versprühenden Stoff und das im Ringspalt 1008 geförderte Gas, sind die Volumenströme des zu versprühenden Stoffs im Fluidkanal 1005 des Innenrohr 1002 und des Gases im Ringspalt 1008 unabhängig voneinander einstellbar oder können unabhängig voneinander eingestellt werden, nämlich durch unabhängig voneinander veränderbare Volumina der verwendeten Vorrichtungen 1033 durch Fluidzufuhr oder Fluidabfuhr. Durch die unabhängige Einstellbarkeit der Volumina unterschiedlicher Vorrichtungen 1033 ist ebenfalls eine optimale Anpassung des Volumenstroms des zu versprühenden Stoffs auf das Zerstäubergas und umgekehrt möglich. Hierdurch kann auch auf die kleinsten Veränderungen in der Symmetrie oder Tröpfchengröße im Spray reagiert werden. Die Vorrichtungen 1033 für den zu versprühenden Stoff und das Gas werden durch hier nicht gezeigte Steuer- und/oder Regeleinrichtungen unabhängig voneinander geregelt und/oder gesteuert.

Die Vorrichtung 1033 ist vorzugsweise konzentrisch um die Leitung 1032 angeordnet und vom Außenrohr 1003 umschlossen, wobei ein Teilabschnitt 1018 aus der Austrittsöffnung 1009 des Außenrohrs 1003 zumindest teilweise heraus in den Austrittsbereich 1012 ragt. In Fig. 13 ist die Vorrichtung 1033 ringförmig um das Innenrohr 1002 herum ausgebildet. Die Vorrichtung 1033 ist bevorzugt als Pressluftring ausgebildet. Die Vorrichtung 1033 kann jedoch auch in jeder erdenklichen anderen Ausführungsform ausgestaltet sein.

Die Vorrichtung 1033 ist vorzugsweise mit einer hier nicht gezeigten Regel- oder Steuereinrichtung verbunden, die die Fluidzufuhr oder Fluidabfuhr der Vorrichtung 1033 regelt oder steuert, sodass das Volumen der Vorrichtung 1033 einstellbar ist oder eingestellt wird. Ganz besonders bevorzugt ist oder wird das Volumen der Vorrichtung 1033 durch Fluidzufuhr oder Fluidabfuhr stufenlos veränderbar oder verändert oder die Volumina der Vorrichtungen 1033 sind oder werden durch Fluidzufuhr oder Fluidabfuhr stufenlos veränderbar oder verändert. Durch die stufenlose Einstellbarkeit des Volumens der Vorrichtung 1033 bzw. der Vorrichtungen 1033 ist es möglich die Volumenströme des zu versprühenden Stoffs und des den zu versprühenden Stoff zerstäubenden Gases genau und gezielt aufeinander einzustellen, sodass die Symmetrie und die Tröpfchengröße des Sprays optimal für den Prozess, insbesondere einen Coatingprozess von Partikeln, vorzugsweise Tabletten, einstellbar ist oder eingestellt wird. In Fig. 13 ist das Volumen der Vorrichtung 1033 minimal, sodass sich die Düse 1001 in der maximalen Offen-Stellung befindet. Die maximale Offen-Stellung ist dementsprechend dadurch gekennzeichnet, dass die Vorrichtung 1033 ein minimales Volumen aufweist.

Ein Schnitt durch die in Fig. 13 gezeigte Düse 1001, wobei das Inlay 1013 und das Innenrohr 1002 eine Leitung 1032 der Düse 1001 ausbilden und die Düse 1001 im Bereich des Düsenmundstücks 1006 zwischen Innenrohr 1002 und Außenrohr 1003 eine ihr Volumen veränderbare Vorrichtung 1033 aufweist, wobei die Vorrichtung in Fig. 14 eine Schließ-Stellung der Düse 1001 darstellt, indem die Vorrichtung 1033 den Fluidkanal 1005 und den Ringspalt 1008 verschließt. Das Inlay 1013 wird durch den durch die Austrittsöffnung 1007 des Innenrohrs 1002 austretenden zu versprühenden Stoff und/oder das durch die Austrittsöffnung 1009 des Außenrohrs 1003 austretende Gas in Schwingung versetzt, insbesondere in eine hochfrequente Schwingung, um Ablagerungen im Austrittsbereich 1007, 1009 des zu versprühenden Stoffs und/oder des Gases zu minimieren oder ganz zu verhindern. Bevorzugt ist ein Teilabschnitt 1018 des Inlays 1013, insbesondere während des Sprühvorgangs, auch längenveränderbar. Aufgrund der zusätzlichen Längenveränderbarkeit des Teilabschnitts 1018 des Inlays 1013, der zumindest teilweise aus dem Innenrohr 1002 oder dem Außenrohr 1003 der Düse 1001 herausragt ist es möglich die Beweglichkeit des Teilabschnitts 1018, insbesondere die Frequenz der Vibration des Teilabschnitts 1018 des Inlays 1013, zu verändern. Durch die vorgenannten Maßnahmen wird die Symmetrie und die Tröpfchengröße des Sprays während des Herstellungs- und/oder Sprühprozesses nicht durch Ablagerungen des zu versprühenden Stoffes beeinflusst, sodass es nicht zu einer unerwünschten Sprühtrocknung und/oder zu lokaler Überfeuchtung und Agglomeration kommt.

In Fig. 14 ist die Düse 1001 mit einem im Vergleich zur Offen-Stellung gemäß Fig. 13 vergrößerten Volumen der Vorrichtung 1033 dargestellt. Der bevorzugt als Vorrichtung 1033 verwendete Pressluftring ist hierzu mit einem Fluid, insbesondere einem Gas, vorzugsweise Pressluft oder dgl., aufgeblasen. Die Vorrichtung 1033 ist bspw. über eine nicht dargestellte Leitung mit einem ebenfalls nicht dargestellten Vorratsbehälter verbunden, über die die Vorrichtung 1033 bspw. mittels einer nicht dargestellten Steuer- und/oder Regeleinrichtung befüll- oder entleerbar ist, sodass die Vorrichtung 1033 ihr Volumen von einem ersten Volumen in der Offen-Stellung gemäß Fig. 13 auf ein zweites Volumen gemäß Fig. 14 in der Schließ-Stellung verändert und umgekehrt.

Im vorliegenden Ausführungsbeispiel wird durch das vergrößerte Volumen der Vorrichtung 1033 sowohl die Leitung 1032, insbesondere die im Düsenmundstück 1006 angeordneten Teilabschnitte 1017 und 1018, als auch der Ringspalt 1008 abgedichtet. Durch das vergrößerte Volumen wird die Leitung 1032, hier die Teilabschnitte 1018 zusammengepresst und zusätzlich die Austrittsöffnung 1009 verschlossen, sodass weder durch den Fluidkanal 1005 noch durch den Ringspalt 1008 ein Fluid strömen kann. Hierdurch wird erreicht, dass bspw. im Falle der Befüllung eines Granulators, eines Coaters, insbesondere eines Trommelcoaters, oder eines Fluidisierungsapparates keine Pellets oder Partikel in die Austrittsöffnungen 1007, 1009 der Düse 1001 eindringen können und diese somit schon vor dem Beginn des Herstellungsprozesses verstopfen.

Weitere Fortbildungen der eine ihr Volumen veränderbare Vorrichtung 1033 aufweisenden Düse 1001 sind denkbar. Bspw. besteht die Möglichkeit, dass die Düse 1001 mehrere Vorrichtungen 1033, insbesondere zwei Vorrichtungen 1033 umfasst. Bevorzugt sind diese durch Einrichtungen wie Bleche oder ähnliches voneinander getrennt, sodass diese unabhängig voneinander betrieben werden können. Vorteilhafterweise weist die Düse 1001 eine erste Vorrichtung 1033 für das Verschließen des Ringspalts 1008 und eine zweite Vorrichtung 1033 für das Verschließen des Fluidkanals 1005 auf. Hierbei sind die beiden Vorrichtungen 1033 vorzugsweise durch ein als Trennwand fungierendes Blech oder dgl. zu trennen, sodass die Volumenänderung einer ersten Vorrichtung 1033 den Fluidkanal 1005 verschließt bzw. öffnet und die Volumenänderung einer zweiten Vorrichtung 1033 den Ringspalt 1008 verschließt bzw. öffnet, ohne dass eine Volumenänderung der einen Vorrichtung 1033 die andere Vorrichtung 1033 beeinflusst. Hierdurch ist es möglich eine stufenlose Einstellung des Volumenstroms mit einem Durchfluss von 0 % und 100 % sowohl für das Zerstäubergas als auch für den zu versprühenden Stoff bereitzustellen, wobei die Einstellung der Volumenströme unabhängig oder abhängig voneinander erfolgen kann.

Bei der Verwendung von mindestens zwei Vorrichtungen 1033 gilt es zu beachten, dass der zu versprühende Stoff, insbesondere die Flüssigkeit, nicht unzerstäubt aus der Düse 1001 austreten darf, da es ansonsten zu Produktions-Ausschuss kommen kann, bspw. durch agglomerierte Tabletten. Hierzu ist zu gewährleisten, dass zu Beginn eines jeden Sprühvorgangs zuerst das Gas, insbesondere das Zerstäubergas, durch den Ringspalt 1008 und somit aus der Düse 1001 strömt und anschließend der zu versprühende Stoff, insbesondere die Flüssigkeit. Beim Beenden des Sprühvorgangs ist zuerst die Zufuhr des zu versprühenden Stoffs zu stoppen und anschließend die des Gases. Eine Regelungs- oder Steuerungseinrichtung kann dieser Tatsache Folge leisten. Hierdurch wird zu jederzeit sichergestellt, dass bei einem Sprühvorgang der zu versprühende Stoff stets zerstäubt wird und am Ende eines jeden Sprühvorgangs kein zu versprühender Stoff unzerstäubt aus der Düse tropft, ggf. auf zu behandelndes (beschichtendes) Material.

Es ist stets sicherzustellen, dass beim Verbringen der Vorrichtung 1033 von der einen Schließ-Stellung des Innenrohrs 1002 in die zumindest eine Offen-Stellung des Innenrohrs 1002 das durch den Ringspalt 1008 strömende Gas zumindest zeitgleich mit dem Verbringen der Vorrichtung 1033 von der einen Schließ-Stellung des Innenrohrs 1002 in die zumindest eine Offen-Stellung des Innenrohrs 1002 durch den Ringspalt 1008 zu strömen beginnt. Des Weiteren ist von Vorteil, dass beim Verbringen der Vorrichtung 1033 von der zumindest eine Offen-Stellung des Innenrohrs 1002 in die eine Schließ-Stellung des Innenrohrs 1002 das durch den Ringspalt 1008 strömende Gas frühestens zeitgleich mit dem Verbringen der Vorrichtung 1033 von der zumindest eine Offen-Stellung des Innenrohrs 1002 in die eine Schließ-Stellung des Innenrohrs 1002 durch den Ringspalt 1008 zu strömen stoppt.

Vorteilhafterweise wird durch dieses Verfahren sichergestellt, dass es beim Anfahren oder Beenden des Sprühvorgangs am Düsenmund, das heißt den Austrittsöffnungen 1007, 1009 von Innenrohr 1002 und Außenrohr 1003, nicht zu einem Austritt von zu versprühendem Stoff kommt, ohne dass dieser direkt durch das durch den Ringspalt 1008 strömende Gas zerstäubt wird. Eine Zerstäubung des zu versprühenden Stoffs wird somit durch das Verfahren stets gewährleistet. Hierdurch kommt es zum einen nicht zu Ablagerungen am Düsenmund bspw. beim Trocknen des zu früh ausgetretenen zu versprühenden Stoffs und zum anderen nicht zu einer Agglomeration von zu besprühenden Partikeln aufgrund von nicht zerstäubten zu versprühenden Stoff.

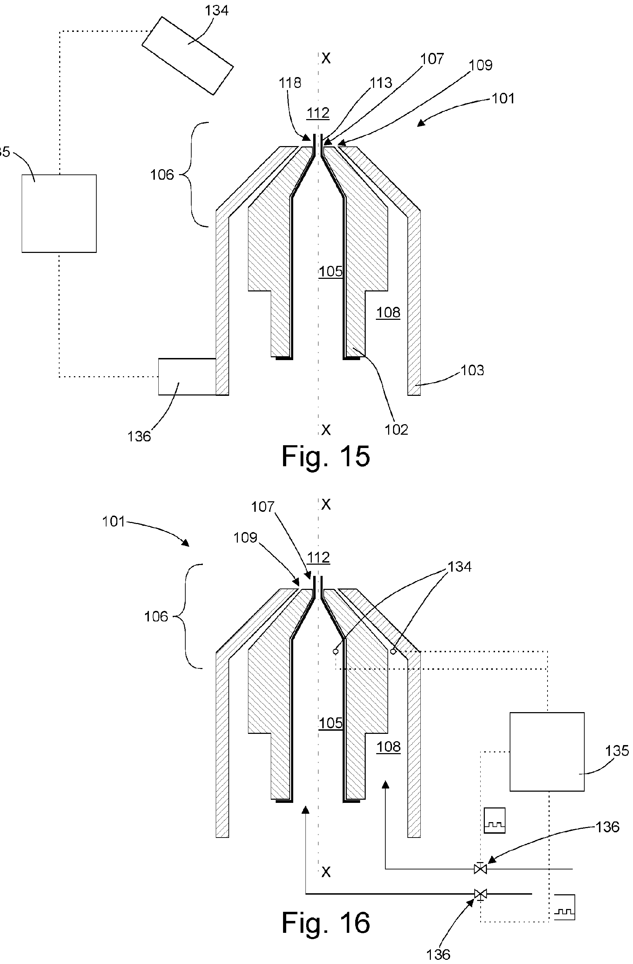

Fig. 15 stellt einen schematischen Aufbau eines ersten Verfahrens zur Überwachung des Düsenmundstücks 106 einer ersten Ausführungsform der Düse 101 dar. Die Düse 101 entspricht der Beschreibung der Fign. 2 bis 4. Auch alle anderen bevorzugten Ausführungsformen der Düse 201, 301, 401, 501, 601, 701, 801, 901 und 1001 sowie weitere erfindungsgemäße Düsen können mit diesem Verfahren überwacht werden. Die Düse 101 weist ein Innenrohr 102 und ein Außenrohr 103 sowie ein am Innenrohr 102 angeordnetes Inlay 113 auf, wobei der Teilabschnitt 118 zumindest teilweise aus der Austrittsöffnung 107 der Düse 101 heraus in einen Austrittsbereich 112 ragt.

Die Überwachung des Düsenmundstücks auf Ablagerungen durch den Sensor 134 erfolgt im Ausführungsbeispiel der Fig. 15 durch einen außerhalb der Düse angeordneten Sensor 134.

Des Weiteren weist der Aufbau für das erste Verfahren einen Sensor 134, insbesondere einen optischen Sensor, ganz besonders bevorzugt einen bildgebenden Sensor, bspw. eine Kamera, oder einen Ultraschallsensor, oder einen eine physikalische Messgröße erfassenden Sensor, bspw. einen Drucksensor, ganz besonders bevorzugt einen Differenzdrucksensor, auf. Der Sensor 134 erfasst die Düse 101, insbesondere das Düsenmundstück 106, ganz besonders die Austrittsöffnungen 107, 109 des Innenrohrs 102 und/oder des Außenrohrs 103 im Austrittsbereich 112 der Düse 101. Der Sensor 134 wird mit einer bestimmten einstellbaren Rate abgetastet. Der Sensor 134 ist mit einer Kontrolleinheit 135, insbesondere einem Daten verarbeitenden Computer, bspw. einen Industrie-PC oder einem Embeded-PC oder dgl., verbunden. Die vom Sensor 134 erfassten Daten werden an die Kontrolleinheit 135 übermittelt. Die Kontrolleinheit 135 wertet die Daten des Sensors 134 aus. Die Kontrolleinheit 135 ermittelt, bspw. durch einen Algorithmus oder dgl., somit, ob sich an der Düse 101, insbesondere dem

Düsenmundstück 106, ganz besonders den Austrittsöffnungen 107, 109 im Austrittsbereich 112 der Düse 101 Ablagerungen ausbilden oder ausgebildet haben. Solche Ablagerungen beeinträchtigen die Qualität des Sprays, insbesondere die Symmetrie und/oder die Tröpfchengröße, während des Herstellungs- und/oder Sprühprozesses stark.

Sobald bspw. durch die Ablagerungen ein bestimmter hinterlegter Grenzwert überschritten wird, wodurch die Symmetrie und die Tröpfchengröße des Sprays während des Herstellungs- und/oder Sprühprozesses beeinträchtigt wird, übermittelt die Kontrolleinheit 135 ein Signal an eine Vorrichtung 136. Im Ausführungsbeispiel der Fig. 15 ist die Vorrichtung 136 als Vibrationseinrichtung ausgebildet und mit der Düse 101 verbunden. Die Vorrichtung 136 versetzt die Düse 101 derart in Vibration, dass sich die Ablagerungen an der Düse 101 ablösen. Sobald die Ablagerungen an der Düse 101, insbesondere dem Düsenmundstück 106, ganz besonders den Austrittsöffnungen 107, 109 im Austrittsbereich 112 der Düse 101 nicht mehr vorhanden sind wird das entsprechende Signal vom Sensor 133 erfasst und an die Kontrolleinheit 135 übermittelt, die anschließend ein Signal an die Vorrichtung 136 übermittelt, dass die Vorrichtung 136 abgeschalten wird. Dieser Vorgang wiederholt sich über den gesamten Herstellungs- und/oder Sprühprozess so oft wie notwendig.

Die mit dem Sensor 134 durchgeführte kontinuierliche Überwachung der Düse 101 erfolgt vorzugsweise als Inline-, Atline- oder Online-Messung. Bspw. erfasst ein Ultraschallsensor die aktuelle Form und die aktuellen Abmessungen der Düse 101 (Istwert). Diese Daten werden anschließend in der Kontrolleinheit 135 zur Beurteilung der Sprayqualität verwendet und mit den ursprünglichen Daten (Sollwert) der Düse 101 abgeglichen. Bevorzugt wird bei einer zu großen Differenz zwischen Ist- und Sollwert ein Signal von der Kontrolleinheit 135 an die Vorrichtung 136 übermittelt und die notwendigen Maßnahmen (Vibration) gestartet. Hierbei ist die als Vibrationseinheit ausgebildete Vorrichtung 136 mit der Düse 101 verbunden, die beim Empfang eines Signals von der Kontrolleinheit 135 die Düse 101 in Vibration versetzt, sodass sich die Ablagerungen am Düsenmundstück 106 lösen. Die Einbindung der vorgenannten Schritte in den Herstellungs- und/oder Sprühprozess ermöglicht die automatische Überwachung der Sprayqualität über die gesamte Dauer des Herstellungs- und/oder Sprühprozesses.

Die Überwachung des Düsenmundstücks 106 auf Ablagerungen durch den Sensor 134 erfolgt im Ausführungsbeispiel der Fig. 16 durch einen innerhalb der Düse 101 angeordneten Sensor 134. Eine derartige Anordnung ist manchmal sinnvoll, insbesondere bei baulich beengten Verhältnissen, bspw. bei ein kleines Volumen aufweisenden Trommelcoatern oder dgl..

Einen zweiten schematischen Aufbau eines Verfahrens zur Überwachung der Düse 101, insbesondere des Düsenmundstücks 106, ganz besonders der Austrittsöffnungen 107, 109 im Austrittsbereich 112 einer ersten Ausführungsform der Düse 101 ist in Fig. 16 gezeigt. Die Druckverhältnisse der originalen Düsenform im Austrittsbereich 112, d.h. ohne Ablagerungen oder Anbackungen, entsprechen dem Sollwert bei der Druckmessung. Hierbei ist je ein Drucksensor 134 im Fluidkanal 105 und im Ringspalt 108 angeordnet. Das Verfahren umfasst bevorzugt mehrere Sensoren 134, insbesondere Sensoren 134, die unabhängig voneinander arbeiten. Durch die mehreren Sensoren 134 ist es möglich die die Symmetrie und Tröpfchengröße negativ beeinflussenden Ablagerungen noch besser am Düsenmundstück 106 der Düse 134 zu erfassen, sodass die am besten geeignetste Maßnahme zum Ablösen der Ablagerungen, bspw. Vibration oder Puls, einleitbar ist.

Der beiden Sensoren 134 werden mit einer bestimmten einstellbaren Rate bzw. in einem bestimmten Takt abgetastet. Kommt es zu Ablagerungen bzw. Agglomerationen an der Düse 101, insbesondere dem Düsenmundstück 106, ganz besonders den AustrittsÖffnungen 107, 109 im Austrittsbereich 112 erhöht sich der Druck im Fluidkanal 105 und/oder im Ringspalt 108 (Istwert). Diese Druckerhöhung wird vom Sensor 134 erfasst und an eine Kontrolleinheit 135 übermittelt. Mittels der erfassten physikalischen Messgröße, hier bspw. dem absoluten Druck, kann bspw. der Massen- und somit auch der Volumenstrom des zu versprühenden Stoffs und/oder des Zerstäubergases berechnet werden. Der messtechnisch erfasste Druck an den Sensoren 134 lässt Rückschlüsse auf die Ablagerungen am Düsenmundstück 106 zu. Ablagerungen b am Düsenmundstück 106 führen zu einem Druckanstieg vor den Austrittsöffnungen 107, 109 im Fluidkanal 105 oder Ringspalt 108 und somit zu einer größeren Strömungsgeschwindigkeit des zu versprühenden Stoffs und/oder des Gases, sodass bei entsprechender Vorgabe von Schwellenwerten (Sollwert) oder Toleranzbereichen (bspw. ± 10 % Abweichung) und deren Über bzw. Unterschreitung die Kontrolleinheit 135 durch Übermittlung eines Signals an die Vorrichtung 136 geeignete Gegenmaßnahmen zum Entfernen der Ablagerungen veranlassbar sind.

Bei der Überwachung findet durch die Kontrolleinheit 135 ein ständiger Abgleich zwischen Ist- und Sollwert statt.

Sobald ein Über- oder Unterschreiten eines bestimmten Grenzwerts (Sollwert) durch die Kontrolleinheit 135 registriert wird übermittelt die Kontrolleinheit 135 ein entsprechendes Signal an eine Vorrichtung 136. Im Ausführungsbeispiel der Fig. 16 ist die Vorrichtung 136 als Pulsationseinrichtung ausgebildet. Diese wird bspw. durch Regelventile an den entsprechenden Zuführungsleitungen der Fluide realisiert. Die Vorrichtung 136 erzeugt eine pulsierende Strömung des zu versprühenden Stoffs und/oder des Gases, insbesondere des Zerstäubergases, dargestellt durch die beiden Diagramme in Fig. 16. Vorzugsweise wird der Gasstrom nur kurzzeitig pulsiert. Unter- bzw. überschreitet der Druck anschließend den Grenzwert erneut wird der Herstellungs- und Sprühprozess fortgesetzt. Ist der Grenzwert weiter über- bzw. unterschritten wird ein erneuter Puls erzeugt. Der aufgeprägte Puls kann unterschiedliche Frequenzen aufweisen, insbesondere zwischen 1 Hz und 1500 Hz, bevorzugt zwischen 25 Hz und 250 Hz. Hierdurch werden die Ablagerungen am Düsenmundstück 106 im Bereich der Austrittsöffnungen 107, 109 des Innen- und Außenrohrs 102, 103 verbessert gelöst und entfernt. Dieser Vorgang wiederholt sich bis die Ablagerungen bzw. Agglomerationen an der Düse 101 entfernt sind, sodass die benötigte Sprayqualität stets sichergestellt ist.

Ein drittes Verfahren bildet die Überwachung der Tröpfchengröße des Sprays während des Herstellungs- und/oder Sprühprozesses bspw. mittels eines Lasermessverfahrens. Bei Abweichungen von Ist- zu Sollwert der Tröpfchengröße, d.h. bei nicht optimaler Tröpfchengröße, entsprechen die zu ergreifenden Maßnahmen im Allgemeinen den Maßnahmen des ersten und zweiten Verfahrens gemäß Fig. 15 oder Fig. 16.

## Patentansprüche

1. Verfahren zur Überwachung eines Düsenmundstücks (106 206 306 1006) auf Ablagerungen an einer Düse (101 201 301 401 501 601 701 801 901 1001) zum Versprühen von Stoffen, insbesondere Dispersionen, Emulsionen oder Suspensionen, umfassend
- einen das Düsenmundstück (106 206 306 1006) aufweisenden Düsenkörper (104 304),
- wobei der Düsenkörper (104 304) ein mit einer Zuführung für den zu versprühenden Stoff verbundenes eine Innenwandung (114) und eine Austrittsöffnung (107 207 307 807 1007) aufweisendes Innenrohr (102 202 302 402 802 902 1002) und ein zum Innenrohr (102 202 302 402 802 902 1002) beabstandetes und mit einer Zuführung für ein Gas verbundenes eine Austrittsöffnung (109 209 309 809 909 1009) aufweisendes Außenrohr (103 203 303 503 603 703 803 903 1003) aufweist, und
- die Austrittsöffnung (107 207 307 807 1007) des Innenrohrs (102 202 302 402 802 902 1002) und die Austrittsöffnung (109 209 309 809 909 1009) des Außenrohrs (103 203 303 503 603 703 803 903 1003) im Bereich des Düsenmundstückes (106 206 306 1006) angeordnet sind,
**dadurch gekennzeichnet, dass** am Innenrohr (102 202 302 402 802 902 1002) oder am Außenrohr (103 203 303 503 603 703 803 903 1003) ein Inlay (113 213 313 413 513 613 713 813 913 1013) angeordnet ist, wobei das Inlay (113 213 313 413 513 613 713 813 913 1013) so angeordnet ist, dass es durch den aus der Austrittsöffnung (107 207 307 807 1007) des Innenrohrs (102 202 302 402 802 902 1002) austretenden zu versprühenden Stoff und/oder das aus der Austrittsöffnung (109 209 309 809 909 1009) des Außenrohrs (103 203 303 503 603 703 803 903 1003) ausströmende Gas in Schwingung versetzbar ist oder versetzt wird, um Ablagerungen im Austrittsbereich (112 212 312 412 512 612 712 812 912 1012) des zu versprühenden Stoffs und/oder des Gases zu minimieren oder zu verhindern, wobei ein mit einer Kontrolleinheit (135) verbundener Sensor (134) das Düsenmundstück (106 206 306 1006) auf Ablagerungen hin überwacht und Signale an die Kontrolleinheit (135) übermittelt und die Kontrolleinheit (135) bei einer durch den Sensor (134) ermittelten Ablagerung im Austrittsbereich (112 212 312 412 512 612 712 812 912 1012) des zu versprühenden Stoffs und/oder des Gases ein Signal an eine Vorrichtung (136) übermittelt.

2. Verfahren nach Anspruch 1, **dadurch gekennzeichnet, dass** die Überwachung des Düsenmundstücks (106 206 306 1006) auf Ablagerungen erfolgt durch einen außerhalb oder innerhalb der Düse (101 201 301 401 501 601 701 801 901 1001) angeordneten Sensor (134).

3. Verfahren nach Anspruch 1 oder 2, **dadurch gekennzeichnet, dass** das Verfahren mehrere Sensoren (134) umfasst.

4. Verfahren nach Anspruch 3, **dadurch gekennzeichnet, dass** die Sensoren (134) unabhängig voneinander arbeiten.

5. Verfahren nach einem der vorhergehenden Ansprüche, **dadurch gekennzeichnet, dass** ein Sensor (134) der Kontrolleinheit (135) Signale übermittelt und die Kontrolleinheit beim Überschreiten eines Schwellenwerts ein Signal an die Vorrichtung (136) übermittelt.

6. Verfahren nach einem der vorhergehenden Ansprüche, **dadurch gekennzeichnet, dass** der Sensor (134) ein optischer Sensor (134) oder ein eine physikalische Messgröße erfassender Sensor (134) ist, insbesondere ein Drucksensor.

7. Verfahren nach einem der vorhergehenden Ansprüche, **dadurch gekennzeichnet, dass** ein Signal von der Kontrolleinheit (135) empfangende Vorrichtung (136) eine Vibrationseinheit oder eine Pulsationseinheit ist.

8. Verfahren nach Anspruch 7, **dadurch gekennzeichnet, dass** die Vibrationseinheit mit der Düse (101 201 301 401 501 601 701 801 901 1001) verbunden ist und beim Empfang eines Signals von der Kontrolleinheit (135) die Düse (101 201 301 401 501 601 701 801 901 1001) zum in Vibration versetzt, sodass sich die Ablagerungen am Düsenmundstück (106 206 306 1006) lösen.

9. Verfahren nach Anspruch 7, **dadurch gekennzeichnet, dass** die Pulsationseinheit auf den im Fluidkanal (105 305 1005) geführten zu versprühenden Stoff und/oder das im Ringspalt (108 208 308 408 508 608 708 1008) geführte Gas beim Empfang eines Signals von der Kontrolleinheit (135) einen Puls aufprägt, sodass sich die Ablagerungen am Düsenmundstück (106 206 306 1006) lösen.

## Claims

1. A method for monitoring a nozzle mouthpiece (106, 206, 306, 1006) with regard to deposits on a nozzle (101, 201, 301, 401, 501, 601, 701, 801, 901, 1001) for spraying substances, in particular dispersions, emulsions or suspensions, comprising
- a nozzle body (104, 304) which has a nozzle mouthpiece (106, 206, 306, 1006),
- wherein the nozzle body (104, 304) comprises an inner pipe (102, 202, 302, 402, 802, 902, 1002), said inner pipe being connected to a feed for the substance to be sprayed and comprising an inner wall (114) and an exit opening (107, 207, 307, 807, 1007), and an outer pipe (103, 203, 303, 503, 603, 703, 803, 903, 1003), said outer pipe being distanced to the inner pipe (102, 202, 302, 402, 802, 902, 1002), being connected to a feed for a gas and comprising an exit opening (109, 209, 309, 809, 909, 1009), and
- the exit opening (107, 207, 307, 807, 1007) of the inner pipe (102, 202, 302, 402, 802, 902, 1002) and the exit opening (109, 209, 309, 809, 909, 1009) of the outer pipe (103, 203, 303, 503, 603, 703, 803, 903, 1003) are arranged in the region of the nozzle mouthpiece (106, 206, 306, 1006),
**characterised in that** an inlay (113, 213, 313, 413, 513, 613, 713, 813, 913, 1013) is arranged on the inner pipe (102, 202, 302, 402, 802, 902, 1002) or on the outer pipe (103, 203, 303, 503, 603, 703, 803, 903, 1003), wherein the inlay (113, 213, 313, 413, 513, 613, 713, 813, 913, 1013) is arranged such that it can be brought or is brought into oscillation by way of the substance to be sprayed which exits out of the exit opening (107, 207, 307, 807, 1007) of the inner pipe (102, 202, 302, 402, 802, 902, 1002) and/or by way of the gas which flows out of the exit opening (109, 209, 309, 809, 909, 1009) of the outer pipe (103, 203, 303, 503, 603, 703, 803, 903, 1003), in order to minimise or prevent deposits in the exit region (112, 212, 312, 412, 512, 612, 712, 812, 912, 1012) of the substance to be sprayed and/or of the gas, wherein a sensor (134) which is connected to a control unit (135) monitors the nozzle mouthpiece (106, 206, 306, 1006) with regard to deposits and transmits signals to the control unit (135) and given a deposition in the exit region (112, 212, 312, 412, 512, 612, 712, 812, 912, 1012) of the substance to be sprayed and/or of the gas, said deposition being determined by the sensor (134), the control unit (135) transmits a signal to a device (136).

2. A method according to claim 1, **characterised in that** the monitoring of the nozzle mouthpiece (106, 206, 306, 1006) with regard to deposits is effected by way of a sensor (134) which is arranged outside or within the nozzle (101, 201, 301, 401, 501, 601, 701, 801, 901, 1001).

3. A method according to claim 1 or 2, **characterised in that** the method comprises several sensors (134).

4. A method according to claim 3, **characterised in that** the sensors (134) operate independently of one another.

5. A method according to one of the preceding claims, **characterised in that** a sensor (134) transmits signals to the control unit (135) and on exceeding a threshold value the control unit sends a signal to the device (136).

6. A method according to one of the preceding claims, **characterised in that** the sensor (134) is an optical sensor (134) or a sensor (134) which detects a physical measurement variable, in particular a pressure sensor.

7. A method according to one of the preceding claims, **characterised in that** a device (136) which receives a signal from the control unit (135) is a vibration unit or a pulsation unit.

8. A method according to claim 7, **characterised in that** the vibration unit is connected to the nozzle (101, 201, 301, 401, 501, 601, 701, 801, 901, 1001) and on receiving a signal from the control unit (135) brings the nozzle (101, 201, 301, 401, 501, 601, 701, 801, 901, 1001) into vibration, so that the deposits on the nozzle mouthpiece (106, 206, 306, 1006) detach.

9. A method according to claim 7, **characterised in that** on receiving a signal from the control unit (135) , the pulsation unit imparts a pulse upon the substance which is to be sprayed and which is led in the fluid channel (105, 305, 1005) and/or upon the gas which is led in the annular gap (108, 208, 308, 408, 508, 608, 708, 1008), so that the deposits on the nozzle mouthpiece (106, 206, 306, 1006) detach.

## Revendications

1. Procédé pour surveiller d'un embout de buse (106, 206, 306, 1006) concernant la présence de dépôts sur une buse (101, 201, 301, 401, 501, 601, 701, 801, 901, 1001) destinée à pulvériser des substances, en particulier des dispersions, des émulsions ou des suspensions, comprenant
- un corps de buse (104, 304) présentant l'embout de buse (106, 206, 306, 1006),
- dans lequel le corps de buse (104, 304) présente un tube intérieur (102, 202, 302, 402, 802, 902, 1002) relié à une arrivée pour la substance à pulvériser, présentant une paroi intérieure (114) et un orifice de sortie (107, 207, 307, 807, 1007) et un tube extérieur (103, 203, 303, 503, 603, 703, 803, 903, 1003) tenu à distance du tube intérieur (102, 202, 302, 402, 802, 902, 1002) et relié à une arrivée pour un gaz, présentant un orifice de sortie (109, 209, 309, 809, 909, 1009), et
- l'orifice de sortie (107, 207, 307, 807, 1007) du tube intérieur (102, 202, 302, 402, 802, 902, 1002) et l'orifice de sortie (109, 209, 309, 809, 909, 1009) du tube extérieur (103, 203, 303, 503, 603, 703, 803, 903, 1003) sont disposés dans la zone de l'embout de buse (106, 206, 306, 1006),
**caractérisé en ce qu'**une incrustation (113, 213, 313, 413, 513, 613, 713, 813, 913, 1013) est disposée sur le tube intérieur (102, 202, 302, 402, 802, 902, 1002) ou sur le tube extérieur (103, 203, 303, 503, 603, 703, 803, 903, 1003), dans lequel l'incrustation (113, 213, 313, 413, 513, 613, 713, 813, 913, 1013) est disposée de telle sorte qu'elle peut être amenée ou est amenée à osciller par la substance à pulvériser sortant de l'orifice de sortie (107, 207, 307, 807, 1007) du tube intérieur (102, 202, 302, 402, 802, 902, 1002) et/ou par le gaz s'écoulant hors de l'orifice de sortie (109, 209, 309, 809, 909, 1009) du tube extérieur (103, 203, 303, 503, 603, 703, 803, 903, 1003) pour minimiser ou pour empêcher la formation de dépôts dans la zone de sortie (112, 212, 312, 412, 512, 612, 712, 812, 912, 1012) de la substance à pulvériser et/ou du gaz, dans lequel un capteur (134) relié à une unité de contrôle (135) surveille l'embout de buse (106, 206, 306, 1006) concernant la présence de dépôts et transmet des signaux à l'unité de contrôle (135) et l'unité de contrôle (135) transmet à un dispositif (136) un signal en cas de présence de dépôts, déterminée par le capteur (134), dans la zone de sortie (112, 212, 312, 412, 512, 612, 712, 812, 912, 1012) de la substance à pulvériser et/ou du gaz.

2. Procédé selon la revendication 1, **caractérisé en ce que** la surveillance de l'embout de buse (106, 206, 306, 1006) en ce qui concerne la présence de dépôts est effectuée par un capteur (134) disposé à l'extérieur ou à l'intérieur de la buse (101, 201, 301, 401, 501, 601, 701, 801, 901, 1001).

3. Procédé selon la revendication 1 ou 2, **caractérisé en ce que** le procédé comprend plusieurs capteurs (134).

4. Procédé selon la revendication 3, **caractérisé en ce que** les capteurs (134) fonctionnent indépendamment les uns des autres.

5. Procédé selon l'une quelconque des revendications précédentes, **caractérisé en ce qu'**un capteur (134) transmet à l'unité de contrôle (135) des signaux et l'unité de contrôle transmet au dispositif (136) un signal lors du dépassement d'une valeur de seuil.

6. Procédé selon l'une quelconque des revendications précédentes, **caractérisé en ce que** le capteur (134) est un capteur optique (134) ou un capteur (134) détectant une grandeur de mesure physique, en particulier un capteur de pression.

7. Procédé selon l'une quelconque des revendications précédentes,
**caractérisé en ce qu'**un dispositif (136) recevant un signal de l'unité de contrôle (135) est une unité de vibration ou une unité de pulsation.

8. Procédé selon la revendication 7, **caractérisé en ce que** l'unité de vibration est reliée à la buse (101, 201, 301, 401, 501, 601, 701, 801, 901, 1001) et à réception d'un signal par l'unité de contrôle (135), la buse (101, 201, 301, 401, 501, 601, 701, 801, 901, 1001) est amenée à vibrer de sorte que les dépôts sur l'embout de buse (106, 206, 306, 1006) se détachent.

9. Procédé selon la revendication 7, **caractérisé en ce que** l'unité de pulsation imprime une impulsion sur la substance à pulvériser guidée dans le canal de fluide (105, 305, 1005) et/ou le gaz guidé dans la fente annulaire (108, 208, 308, 408, 508, 608, 708, 1008) à réception d'un signal par l'unité de contrôle (135) si bien que les dépôts sur l'embout de buse (106, 206, 306, 1006) se détachent.
